# EUROPEAN PATENT SPECIFICATION

(11) **EP 1 547 279 B1**
(45) Date of publication and mention of the grant of the patent: **29.10.2008**
(21) Application number: 03752488.1
(22) Date of filing: 22.09.2003
(51) Int. Cl.: H04B 7/216, H04L 12/56, H04Q 7/38

(54) **MOBILE COMMUNICATIONS SYSTEM AND METHOD FOR PROVIDING MOBILE UNIT HANDOVER IN WIRELESS COMMUNICATION SYSTEMS THAT EMPLOY BEAMFORMING ANTENNAS**
MOBILKOMMUNIKATIONSSYSTEM UND VERFAHREN ZUR BEREITSTELLUNG EINER MOBILEINHEIT-WEITERREICHUNG IN DRAHTLOSEN KOMMUNIKATIONSSYSTEMEN, DIE STRAHLFORMUNGSANTENNEN VERWENDEN
SYSTEME DE COMMUNICATION MOBILE ET PROCEDE POUR ASSURER UN TRANSFERT D'UNITE MOBILE DANS DES SYSTEMES DE COMMUNICATION SANS FIL UTILISANT DES ANTENNES DE FORMATION DE FAISCEAUX

(30) Priority: 27.09.2002 US 414571 P
(43) Date of publication of application: 29.06.2005
(73) Proprietor: INTERDIGITAL TECHNOLOGY CORPORATION, Wilmington, Delaware 19810 (US)
(72) Inventor: CAVE, Christopher, Candiac, Québec J5R 4W7 (CA); RUDOLF, Marian, Montreal, Québec H2L 3C7 (CA); ZUNIGA, Juan Carlos, Montreal, Québec H4L 3J4 (CA)
(74) Representative: Pierrou, Mattias
(86) International application number: PCT/US2003/029468
(87) International publication number: WO 2004/030249

(56) References cited:
- EP-A- 0 932 319
- US-A- 4 723 266
- US-A- 5 634 192
- US-A- 5 893 033
- US-A- 6 014 565
- US-A- 6 088 590
- US-B1- 6 445 917
- WANG W-J ET AL: "SOFT HANDOFF ANALYSIS OF CDMA SYSTEMS USING NOVEL SWITCHED-BEAM SMART ANTENNAS WITH POLARIZATION DIVERSITY" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY : IEEE, US, vol. VOL. 1 OF 4. CONF. 53, 6 May 2001 (2001-05-06), pages 243-247, XP001066958 ISBN: 0-7803-6728-6

## Description

### FIELD OF THE INVENTION

The present invention relates to mobile communication systems. More particularly, the present invention relates to wireless communication systems that supporting mobile unit communications and, in particular, hand over of mobile unit communications from one base station to another where beamforming or "smart" antennas are employed for such communications.

### BACKGROUND OF THE INVENTION

Wireless communication systems are well known in the art. Generally, such systems comprise communication stations which transmit and receive wireless communication signals between each other. Typically, base stations are provided which are capable of conducting wireless concurrent communications with a plurality of subscriber stations generically known as wireless transmit/receive units (WTRUs), which include mobile units. Generally, the term base station includes but is not limited to a base station, Node-B, site controller, access point or other interfacing device in a wireless environment. The term WTRU includes but is not limited to a user equipment (UE), mobile station, fixed or mobile subscriber unit, pager, or any other type of device capable of operating in a wireless environment.

US patent no. 6,088,590 discloses an over-air protocol for use with a mobile telephone system having hand-held telephones in a microcell or other type of cellular communication system. A method is disclosed in which user stations communicate with one or more base stations to place and receive telephone calls, in which the user stations are provided a secure voice or data link and have the ability to handoff calls between base stations while such calls are in progress. Each base station has a set of "air channels" to which it transmits in sequence. The air channels supported by each base station are called that base station's "polling loop". A user station receives general polling information on an unoccupied air channel, transmits responsive information to the base station, and awaits acknowledgment from the base station. Each base station may therefore simultaneously maintain communication with as many user stations as there are air channels in its polling loop. A drawback with US patent no. 6,088,590 is the continual polling of broadcasts by the base stations and continual monitoring of such broadcasts by the user station.

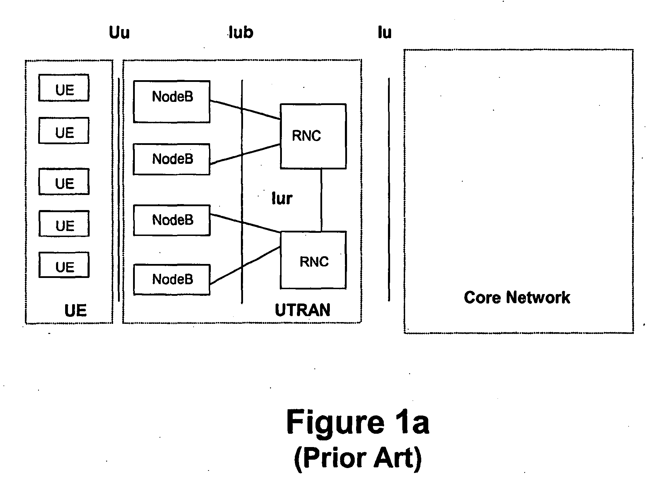

A typical universal mobile telecommunications system (UMTS) system architecture in accordance with current third generation partnership project (3GPP) specifications is depicted in Figure 1a. The UMTS network architecture includes a core network (CN) interconnected with a UMTS Terrestrial Radio Access Network (UTRAN) via an interface known as Iu, which is defined in detail in the current publicly available 3GPP specification documents.

In Universal Mobile Telecommunications Systems (UMTS) as specified by the Third Generation Partnership Project (3GPP), base stations are called Node Bs, subscriber stations are called user equipments (UEs) and the wireless code division multiple access (CDMA) interface between the Node Bs and UEs is known as the Uu interface.

The UTRAN is configured to provide wireless telecommunication services to users through UEs via the Uu radio interface. The UTRAN has base stations, Node Bs, which collectively provide for the geographic coverage for wireless communications with UEs. In the UTRAN, groups of one or more Node Bs are connected to a radio network controller (RNC) via an interface known as Iub in 3GPP. The UTRAN may have several groups of Node Bs connected to different RNCs. Two RNCs are shown in the example depicted in Figure 1a. Where more than one RNC is provided in a UTRAN, inter-RNC communication is performed via an Iur interface.

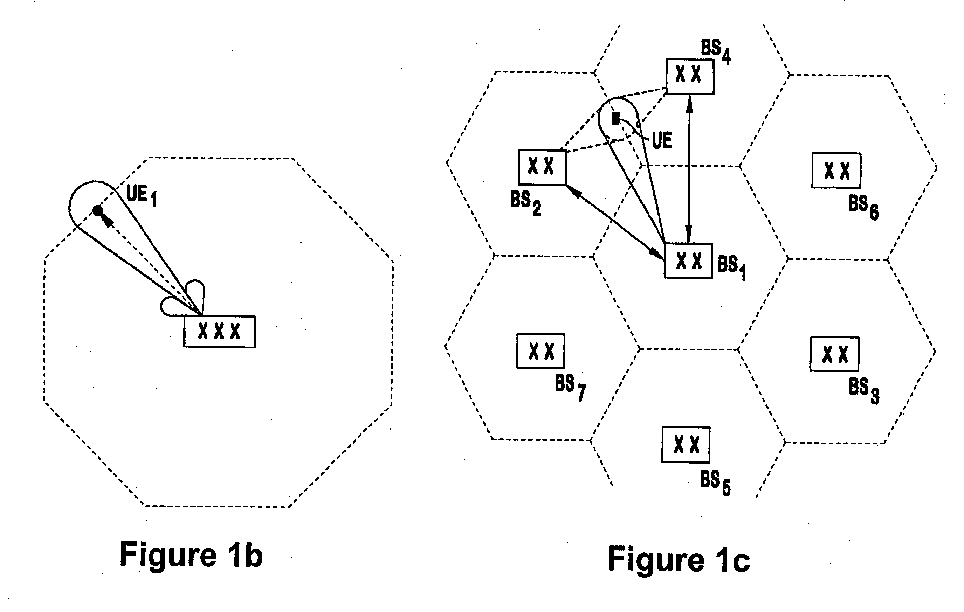

Smart antennas that include beamforming capability are widely regarded as a promising technology for enhancing capacity and/or coverage of wireless radio access systems, such as 3GPP mobile communications systems. The distinguishing feature of a wireless radio access system employing smart antennas is that a user can be spatially isolated in such a way that interference to and from other users is held to a minimum. Radio transmissions directed toward, or received from, a user are isolated in such a way to minimize interference to or from other users. Figure 1b illustrates a smart antenna of a Node B focused at a UE of a 3GPP system.

Wireless radio access systems, such as UMTSs that employ smart antennas, derive two-fold system-level benefits by using highly focused directional antennas. First, the system capacity improves as a result of the reduction in generated interference. Second, the system coverage improves which results in an enhanced link budget.

The enhanced link budget is the level of signal power within a radio communications system which can be transmitted by a UE or a base station without causing harmful interference to any part of the system. The link budget usually takes into account antenna gain and propagation loss based upon a minimum separation distance between the UEs and the base station transmitter or transmitters if an aggregate scenario is being considered. The end result of this link budget will be an equivalent isotropic radiated power (EIRP) which can be radiated by a base station transmission system without causing harmful interference to the radio communications system.

The increase in radio coverage from the use of smart antenna technology represents a particularly attractive feature for wireless communications systems. The application of smart antenna technology, including beamforming is rather straightforward once a radio link is established between a mobile and a radio access point to exchange information over a dedicated channel.

In addition to dedicated radio links, common channels are typically employed in wireless radio access systems. Common channels are established for various purposes, such as: 1) allowing for the temporal or frequency synchronization of mobiles, for example, a 3GPP shared synchronization channel (SCH); 2) broadcasting of system information that is essential for registration to the network upon power-up, for example on a 3GPP broad cast channel (BCH); and 3) paging of idle-mode mobiles, for example on a 3GPP paging indicator channel (PICH), paging channel (PCH) and forward access channel (FACH).

In a statistical sense, the geographical coverage that is provided by downlink common channels defines the coverage area of a base station, which in UMTS, is commonly referred to as a cell. More specifically, the service area provided by a wireless radio access system is determined from the coverage of common channels.

A significant increase in cell area covered by a wireless radio access system using smart antenna technology is enabled by employing highly directional antennas that boost the gain of such systems. Directional antenna gain is achievable when the position of an antenna can be estimated by its peer antenna, and vice versa. Such circumstances are generally fulfilled when a dedicated radio link is established between a mobile and a radio access point.

The usage of smart antennas for the transmission and reception of common channels is not defined in wireless radio access systems existing 3GPP specifications and the advantages resulting from the use of smart antenna technology have yet to be exploited for the transmission and reception of common channels. A reason for this is that coverage of common channels, such as BCH and PICH must be guaranteed for all mobiles, including those for which the location is unknown. More specifically, a radio access network must ensure that all mobiles can reliably synchronize with the network, read broadcast information, and monitor pages, to name a few. This complication results in wireless radio access systems that transmit common channels using conventional omni-directional antennas that cover entire cells or cell sectors.

In order to match the extended coverage of dedicated channels using smart antennas, the transmission power of downlink common channels may be increased. However, an increase in transmission power by all radio access points, for example, base stations, also results in an increase in interference. Such a solution is ineffective in wireless radio access systems that are limited by interference.

The present inventors have devised a preferred solution that takes advantage of smart antenna technology to extend coverage while minimizing interference which is the subject of International Application No. PCT/US03/24342 filed 4 August 2003 and a corresponding U.S. Application filed July 24, 2003. There the inventors disclose a system that makes use of smart antenna technology, including beamforming for a wireless radio access system where the functionality of smart antennas for radio links is preferably applied to common channels, resulting in a significant increase in cell coverage. An omnidirectional sounding pulse is used in connection with initiating mobile unit wireless communications. The sounding pulse, a radio frequency (RF) signal with or without intelligence, should not be confused with conventional mobile unit uplink channels.

In one embodiment a radio network is provided that has a plurality of base stations, each providing wireless communication services in a respective geographic coverage area that may or may not overlap with the geographic coverage areas of other of the base stations. An interface is connected to the base stations.

A wireless communication is established by first transmitting an omnidirectional sounding pulse from a wireless mobile unit located in a geographic coverage area of at least one of the base stations. Information related to the detected sounding pulse is communicated to the interface by each base station detecting the sounding pulse. One of the base stations that detected the sounding pulse is selected for mobile unit communication based on the communicated information. The selected base station directs a communication beam to the mobile unit to establish wireless communication.

In one non-limiting example, the radio network is a UMTS Terrestrial Radio Access Network (UTRAN), each base station is a Node B, the interface is a Radio Network Controller (RNC) and the mobile unit is a mobile User Equipment (UE). In such case, the communicating of related sounding pulse information is between Node Bs and the RNC via an Iub or a combination Iub/Iur interface via another RNC. The base station selection is preferably performed by the RNC by selecting a Node B and the communication established between the selected Node B and the UE is via a Uu interface.

Preferably, each base station has a selectively operable beamforming antenna. The establishment of a wireless communication then includes determining a relative location of the mobile unit with respect to the beamforming antenna of the selected base station based on information related to the detected sounding pulse. Accordingly, in directing of a communication beam the selected base station's antenna is operated to form a communication beam covering a selected portion of the coverage area serviced by the selected base station that encompasses the relative location of the mobile unit.

The formed communication beam preferably carries common channels. In such case, the selected base station's antenna may be operated to form a communication beam that encompasses the relative location of the mobile unit such that other mobile units with which the selected base station is conducting wireless communication are also encompassed within the formed communication beam so that the formed beam provides common channel service to a plurality of mobile units. Alternatively, individual beams for each mobile unit can be utilized.

If the mobile unit does not receive a directed communication beam from a base station within a predefined time period from its transmitting of an omnidirectional sounding pulse, the communication initiation as preferably restarted. Accordingly, the mobile unit is configured to transmit an omnidirectional sounding pulse to initiate communication with a base station and to transmit a subsequent sounding pulse which may be of increased power if a communication beam from a base station that detected a sounding pulse is not established.

Also, the mobile units are preferably configured to monitor the power level of a communication with a base station and to repeating the communication initiation if the monitored power level falls below a predefined level. Additionally, the mobile units can be configured to transmit a series of omnidirectional sounding pulses of increasing power to initiate communication with a base station.

An omnidirectional sounding pulse may be transmitted from each of a plurality of mobile units. In such case, information related to each distinguishable sounding pulse from each respective mobile unit detected by a base station is communicated to a respective selecting interface. Each respective interface selects a base station for each respective mobile unit communication based on the information related to the distinguishable detected sounding pulse of the respective mobile unit from each base station that detected a distinguishable sounding pulse of the respective mobile unit. For each respective mobile unit for which at least one base station received a distinguishable sounding pulse, a communication beam from the respective selected base station is directed to the mobile unit to establish wireless communication.

Preferably, the formed communication beams carry common channels. In some instances, a first base station is selected for communication with a first mobile unit and is also selected for communication with a second mobile unit. The first base station's antenna may then be operated to form a communication beam that encompasses the relative location of both the first and second mobile units so that the formed beam provides common channel service to both first and second mobile units. In other instances a first base station is selected for communication with a first mobile unit by a first selected interface and a second base station is selected for communication with a second mobile unit by a second selected interface.

When at least one base station receives the sounding pulse, measurements can be made to determine a received power level and an estimate of the angle of arrival to the mobile unit. This information from one or more base stations can be used to determine the mobile unit's relative location and to accordingly direct a communication beam toward the mobile unit.

In another embodiment, the mobile unit selects the base station with which it will establish wireless communication. An omnidirectional sounding pulse is transmitted from the mobile unit located in a geographic coverage area of at least one of the base stations. A communication beam is directed from base stations detecting the sounding pulse towards the mobile unit. One of the base stations that detected the sounding pulse is then selected based on the communication beams received by the mobile unit. A wireless communication is then established between the selected base station and the mobile unit.

The implementing radio network can have a controlling interface connected to the base stations. In such case, the information related to the detected sounding pulse can be communicated to the interface by each base station detecting the sounding pulse. One or more of the base stations that detected the sounding pulse can then be chosen based on the communicated information so that only the chosen base stations direct a communication beam to the mobile unit. In this way the radio access network can selectively limit the selection made by the mobile unit.

A preferred mobile unit includes a transmitter configured to transmit an omnidirectional sounding pulse and a receiver for receiving communication beams from base stations that detected a sounding pulse transmitted by the mobile unit. The mobile unit may include a processor configured to select a base station with which to establishing a wireless communication based on communication beams received by the mobile unit from base stations that detected a sounding pulse transmitted by the mobile unit.

Each mobile unit can be equipped with a global positioning system (GPS). In such case, the mobile units are preferably configured to transmit of an omnidirectional sounding pulse that includes mobile unit location information determined by its GPS. The mobile units can also be configured to transmit of an omnidirectional sounding pulse that includes mobile unit identification information.

In such a system employing smart antennas, unique problems can arise in the handover of an ongoing communication conducted by a mobile unit. For example, a radio link is first established between a UE and a radio access point, such as a base station to exchange of information over a dedicated channel. As the UE moves into a neighboring cell a new dedicated radio link needs to be established in order to continue the communication without interruption. The dedicated link must be transferred to the new neighboring cell. The user should not perceive any changes, as this operation must occur in a seamless manner.

The transfer of a dedicated radio link from one cell to another is referred to as a handover (or handoff) and is generally under control of the radio access network (RAN). The handover decision is based upon either physical triggers or user desired cell reselection for special services. The triggers are typically based on the received signal power of downlink and/or uplink transmissions. The downlink is generally thought of as the signal transmission path from the base station to the UE and the uplink is the UE to base station transmissions.

The handover of a UE from one cell to another is easily performed in a conventional wireless communication systems which does not employ smart antenna technology. This is due to fact that the UE and the RAN can monitor a received signal power to and from the UE with respect to the neighboring cells. However, this is not the case when smart antennas are employed for both uplink and downlink operation of the dedication channels. The situation is compounded in wireless communication systems where common channels, such as the broadcast channel (BCH) and the paging channel (PCH) are transmitted using smart antennas. For example, referring to Figure 1c, a UE moves into the neighboring cell, the new base station BS4 in the neighboring cell will not necessarily be directing a beam with common channels toward the UE's location. Conversely, the UE will not be directing a beam toward the base station BS4 because the UE does not know the base station's location. The UE will try to maintain its current dedicated radio links with the first base station BS2 of the first cell.

The new base station may not monitor the received signal power from the UE in the above scenario. In these cases, the UE cannot readily monitor the received signal power of a beacon channel (BCH) from the neighboring cells. Therefore, a handover decision, which includes a handover trigger and cell selection is much more complicated in such systems.

It is therefore desirable to provide a method for facilitating handover in situations where smart antenna technology is used at either the base station, the UE or in both base station and UE. The present preferred solution takes advantage of smart antenna technology to extend coverage while minimizing interference in mobile station handoff.

### SUMMARY

The present invention is directed in context to a wireless radio access system that employs the use of smart antenna technology, including beamforming. An omnidirectional sounding pulse is used in connection with handoff of a mobile unit communication conducted via a first access point to continuing the communication via a second access point in a wireless communications system. A Radio Access Network can take advantage of information related to the existing mobile unit communication to assist in seamless handover to base stations employing beamforming antennas.

In one embodiment a radio network has a plurality of base stations, each providing wireless communication services for mobile units in a respective geographic coverage area that may or may not overlap with the geographic coverage areas of other of the base stations, and an interface connected to the base stations. A method for handoff of a wireless communication with a mobile unit conducted via a first base station to a second base station in such a wireless system is provided. A handover trigger event is detected during the mobile unit's wireless communication via the first base station. An omnidirectional sounding pulse is the transmitted from the mobile unit. Information related to the detected sounding pulse is communicated to the interface by each base station detecting the sounding pulse. The second base station is selected from the base stations that detected the sounding pulse based on the communicated information. The mobile unit's wireless communication is then continued via the selected second base station.

Preferably, each base station has a selectively operable beamforming antenna. In such case, a relative location of the mobile unit is preferably determined with respect to the beamforming antennas of base stations neighboring the first base station. Beacon channels of the neighboring base stations are then directed toward the mobile unit location to receive the transmitted sounding pulse. Alternatively, the neighboring base stations are commanded to sweep beacon channels over an arc encompassing the mobile unit location to receive the transmitted sounding pulse.

Where each base station has a selectively operable beamforming antenna, a relative location of the mobile unit with respect to the beamforming antenna of the selected base station can be determined based on information related to the detected sounding pulse. In such case the continuing of the mobile unit's communication via the second base station preferably includes operating the selected base station's antenna to form a communication beam covering a selected portion of the coverage area serviced by the selected base station that encompasses the relative location of the mobile unit. Preferably, the formed communication beam carries common channels and the second base station's antenna is operated to form a communication beam that encompasses the relative location of the mobile unit such that other mobile units with which the selected base station is conducting wireless communication are also encompassed within the formed communication beam so that the formed beam provides common channel service to a plurality of mobile units.

The transmission of the omnidirectional sounding pulse may include transmitting identification information associated with the sounding pulse transmitted the mobile unit. Where the mobile unit is equipped with a global positioning system (GPS), transmitting the omnidirectional sounding pulse preferably includes transmitting of mobile unit location information associated with the sounding pulse transmitted by the mobile unit. Additionally, the transmitting of the omnidirectional sounding pulse may include transmitting a subsequent or series of subsequent sounding pulse of increased power by the mobile unit, particularly, if handover does not occur within a predefined time period from its transmitting of an omnidirectional sounding pulse.

In a 3GPP context, the radio network is a UMTS Terrestrial Radio Access Network (UTRAN), each base station is a Node B, the interface is a Radio Network Controller (RNC) and the mobile unit is a mobile User Equipment (UE). In such case, the communicating information is between Node Bs and the RNC via an Iub or combination Iub/Iur interface, the second base station selection is performed by the RNC by selecting a second Node B, and the UE's communication continued via the second Node B is via a Uu interface.

A preferred communication network according to the invention has a plurality of base stations, each providing wireless communication services in a geographic coverage area that may or may not overlap with the geographic coverage areas of other of the base stations. At least one base station interface is connected to the base stations such that each base station has a controlling interface associated with its base station to mobile unit wireless communications. Each base station is configured to detect sounding pulses emitted from mobile units in order to establishment wireless communication with such mobile units. Each base station is configured to communicate information related to a detected sounding pulse from a mobile unit to a selected interface. Each interface, when acting as a controlling interface for a serving base station where a communication of a communicating mobile unit is conducted via the serving base station, is configured to select a handover base station for continuing the wireless communication of the communicating mobile unit based on information communicated from each base station that detected a sounding pulse emitted from the communicating mobile unit during the communication with the serving base station. Each base station is configured to direct a communication beam when selected as the handover base station for a communicating mobile unit to continue the communicating mobile unit's wireless communication via the handover base station.

Each base station preferably has a selectively operable beamforming antenna. In such case, each interface, when acting as a controlling interface for a serving base station where a communication of a communicating mobile unit is conducted via the serving base station, is preferably configured to command base stations neighboring the serving base station to direct beacon channels of the neighboring base stations toward a determined location of the communicating mobile unit to receive the transmitted sounding pulse. Alternatively, each interface, when acting as a controlling interface for a serving base station where a communication of a communicating mobile unit is conducted via the serving base station, can be configured to command base stations neighboring the serving base station to sweep beacon channels over an arc encompassing a determined location of the communicating mobile unit to receive the transmitted sounding pulse. In either case, each interface can be configured to determine the relative location of the communicating mobile unit.

The system preferably includes mobile units, each configured to transmit an omnidirectional sounding pulse to initiate handover from a serving base station to a handover base station. The mobile units can each be configured to monitoring the power level of a directed communication beam from a base station that is received by the mobile unit and to transmit an omnidirectional sounding pulse if the monitored power level falls below a predefined level or configured to transmit a subsequent omnidirectional sounding pulse if a directed communication beam is not received from a handover base station within a predefined time period from transmitting an omnidirectional sounding pulse. Each mobile unit can be equipped with a global positioning system (GPS) and configured to transmit of an omnidirectional sounding pulse that includes mobile unit location information determined by its GPS. Also, each mobile unit can be configured to transmit of an omnidirectional sounding pulse that includes mobile unit identification information.

Where the radio network is a UMTS Terrestrial Radio Access Network (UTRAN), each base station is a Node B configured to communicate with mobile units configured as mobile User Equipments (UEs) via a Uu interface, and each base station interface is a Radio Network Controller (RNC) configured for communicating information with the Node Bs via an Iub interface or combination Iub/Iur interface in connection with another RNC. In such case, each Node B preferably has a selectively operable beamforming antenna configurable to direct a communication beam covering a selected portion of the coverage area serviced by the Node B that encompasses the relative location of a communicating UE when that Node B is selected as the handover Node B for a wireless communicate of the communicating UE. Also, each Node B can be configured to operate its antenna to form a communication beam that carries common channels that encompasses the relative location of a plurality of UEs so that the formed beam provides common channel service to a plurality of UEs.

In a further embodiment, a communication network for wireless communication includes a plurality of base stations that each provides wireless communication services in a geographic coverage area that may or may not overlap with the geographic coverage areas of other of the base stations and mobile units that each are configured to transmit an omnidirectional sounding pulse during a wireless communication via a serving base station upon the occurrence of a handover trigger event to initiate handover to continue the communication via a handover base station and to select the handover base station based on reception of information communicated from base stations responding to the sounding pulse within a predefined time period from its transmitting of an omnidirectional sounding pulse. Each base station is preferably configured to detect sounding pulses emitted from mobile units in order to establishment wireless communication with such mobile units. Each base station is also preferably configured to communicate information related to a detected sounding pulse from a mobile unit to the mobile unit. Also, each base station is preferably configured to direct a communication beam when selected as the handover base station for a communicating mobile unit to continue the communicating mobile unit's wireless communication via the handover base station.

Such a system can also include at least one base station interface connected to the base stations such that each base station has a controlling interface associated with its base station to mobile unit wireless communications. Each interface, when acting as a controlling interface for a serving base station where a communication of a communicating mobile unit is conducted via the serving base station, is configured to determine a relative location of the communicating mobile unit so that the interface can command neighboring base stations of the serving base station to selectively direct their beamforming antennas towards the determined relative location of the communicating mobile unit when the mobile unit is to emit a sounding pulse for initiating handover.

A further method for handoff of a wireless communication conducted by a communicating mobile unit via a serving base station to a handover base station is provided. An omnidirectional sounding pulse is transmitted from the communicating mobile unit during the wireless communication upon the occurrence of a triggering event. A communication beam is directed from base stations detecting the sounding pulse towards the mobile unit. A handover base station is selected from the base stations that detected the sounding pulse based on the communication beams received by the mobile unit. The wireless communication is then continued via the selected handover base station. Wherein the radio network has an interface connected to the base stations, information related to the detected sounding pulse is preferably communicated to the interface by each base station detecting the sounding pulse. One or more of the base stations that detected the sounding pulse are then chosen for responding to the mobile unit sounding pulse based on the communicated information so that only the chosen base stations direct a communication beam to the mobile unit.

Wherein each base station has a selectively operable beamforming antenna, a relative location of the communicating mobile unit with respect to the beamforming antenna of each sounding pulse receiving base station is preferably determined based on information related to the detected sounding pulse whereby the directing of a communication beam includes operating the respective base station's antenna to form a communication beam covering a selected portion of the coverage area serviced by the respective base station that encompasses the relative location of the mobile unit. Preferably, each respective formed communication beam carries common channels and the operating each respective base station's antenna to form a communication beam that encompasses the relative location of the mobile unit is conducted such that other mobile units with which the respective base station is conducting wireless communication are also encompassed within the formed communication beam.

The invention includes the provision of a mobile unit for use in a radio network having a plurality of base stations where each base station providing wireless communication services in a respective geographic coverage area that may or may not overlap with the geographic coverage areas of other of the base stations. The mobile unit has a transmitter, a receiver and a processor. The transmitter is configured to transmit an omnidirectional sounding pulse based on the occurrence of a triggering event during a wireless communication conducted via a serving base station. The receiver is configured to receive communication beams from base stations that detected a sounding pulse transmitted by the mobile unit. The processor is configured to select a handover base station via which the mobile unit is to continue the wireless communication based on communication beams received by the mobile unit from base stations that detected the sounding pulse transmitted by the mobile unit. The mobile unit can be configured to transmit a subsequent or a series of subsequent omnidirectional sounding pulses if a communication beam is not received from a base station that detected a sounding pulse transmitted by the mobile unit within a predefined time period from transmitting an omnidirectional sounding pulse. Where the mobile unit is equipped with a global positioning system (GPS), it is preferably configured to transmit an omnidirectional sounding pulse that includes mobile unit location information determined by its GPS. The mobile unit can be configured to transmit of an omnidirectional sounding pulse that includes mobile unit identification information.

Other objects and advantages of the present invention will be apparent to those skilled in the art from the following detailed description and relate drawings

### BRIEF DESCRIPTION OF THE DRAWINGS

Figure 1a depicts a typical UMTS system architecture in accordance with current 3GPP specifications.

Figure 1b illustrates a smart antenna of a Node B focused at a UE of a 3GPP system.

Figure 1c illustrates a UE traveling through the cells covered by a network of node B base stations of a 3GPP system that employ smart antennas.

Figure 2 is a flow diagram of a base station selection or reselection RAN-based procedure in accordance with an embodiment of the present invention.

Figure 3 is a flow diagram of a base station selection or reselection procedure variation in accordance with an embodiment of the present invention.

Figure 4 is a flow diagram of a selection or reselection mobile unit-based procedure in accordance with an embodiment of the present invention.

### DETAILED DESCRIPTION OF THE PREFERRED EMBODIMENTS

The present invention is described with reference to the drawing figures wherein like numerals represent like elements throughout. The present invention can be applied to some or all of a systems' downlink common channels. For reason of simplicity, the invention as applied to a UMTS system for downlink common channels is described herein. However, the proposed invention is applicable in any wireless system.

The present invention provides a wireless radio access network having networked base stations with an improved base station selection mechanism for mobile units, i.e. mobile WTRUs, as they enter and/or travel through the respective areas of geographic coverage provided by the respective base stations. Such mobile units, for example the UEs illustrated in Figure 1a, generally include a transmitter, a receiver and a communication signal processor. The network preferably includes some type of base station interface that makes the selection. Such an interface for node Bs of a 3GPP network is a Radio Network Controller (RNC). However, an alternative embodiment provides for self-selection by the mobile unit.

In lieu of providing complete uniform coverage throughout an entire cell or cell sector, a base station selectively directs at least some, but preferably all, downlink common channels toward individual mobile units using smart antenna technology, including beamforming. Figure 1b illustrates such coverage in a 3GPP system by a node B for a mobile unit UE1 traveling a cell indicated in phantom. Preferably, coverage by a base station of a downlink common channel or beacon channel matches that of dedicated channels using smart antennas.

A pattern of mutually exclusive cells can be mapped to denote the overall coverage area of a wireless radio access network as illustrated in phantom in Figure 1c. However, the actual geographic coverage area capable of being serviced by each base station normally extends beyond the nominal cell mapping and overlaps with the actual geographic coverage area of neighboring base stations. For, example in Figure 1c, the mobile unit UE is depicted as being capable of being serviced by at least any of base stations BS₁, BS₂, or BS₄. In addition to initially establishing a communication link when a mobile unit is activated and/or attempts to initiate a call, it is desirable that an established communication can be maintained without interruption while the mobile unit travels which may require the communication with the traveling mobile unit to be "handed over" from one network base station to another. The selection of a base station to initiating communications is similar to the selection of a base station to implement a communication handover. However, as explained below the initiation selection can be advantageously modified for implementing selection in the case of handover.

The invention is described below in terms of "hard" handover embodiments where a mobile unit terminates communication with a first base station before communicating with a second base station. However, the invention is readily applicable for "soft" handover where a mobile unit is simultaneously communicating with two or more base stations. In such case conventional soft handover triggers serve to initiate the sending of a sounding pulse by the mobile unit.

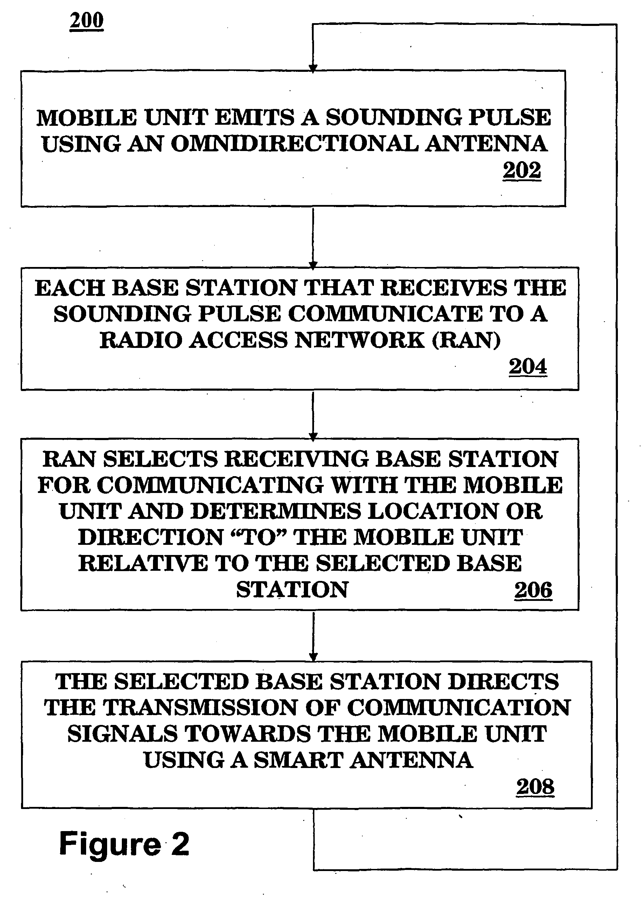

Figure 2 is a flow diagram of a base station selection procedure in accordance with an initiation embodiment of the present invention. In a first step 202, a mobile unit emits a sounding pulse in a using an omni directional antenna to produce a uniformly radiated radio frequency (RF) pattern. Each base station that receives the sounding pulse, communicates that information to a Radio Network Controller (RAN) as indicated in step 204. For example, a sounding pulse emitted by mobile unit UE in Figure 1c would most likely be received by base stations BS₂ and BS₄, but may also be received by base station BS₁ and possibly base stations BS₆ and BS₇ as well.

The receiving base stations may or may not be controlled by the same RNC. Where more that one RNC is involved, preferably the one that first receives a communication from one of its associated node B base stations becomes the deciding RNC and has the reception of the sounding pulse information conveyed to it by the RNC(s) associated with the other base station(s) that receive the sounding pulse such as via a standard Iur interface as illustrated in Figure 1a. Where a base station is in another UTRAN, communication to the deciding RNC can be made via the core network of an existing 3GPP system.

The RAN selects one of the pulse receiving base stations and determines the direction from the selected base station to the mobile unit as reflected in step 206. The selection decision is preferably based on the strength of the received signal. Where more than one base station receives the sounding pulse above a selected minimum strength, other standard quality of service (QoS) and/or admission control criteria can be compared in the selection process. Also, overall network traffic may be considered in the selection decision such as disclosed in U.S. Patent Appln. No. 10/305,595 owned by the assignee of the present invention.

Where the deciding RNC is not the RNC directly associated with the selected base station, the selected base station's RNC can be used to determine the direction from the selected base station to the mobile unit. However, where overall network traffic is being evaluated the RNC(s) can communicate all of the data to the core network and the core network can be utilized to assist in or make the base station selection. Such alternatives can be triggered when the communication traffic with respect to an RNC or UTRAN reach certain specified minimum levels. As intimated by Figure 1c, even though base stations BS₂ and BS₄, are closer to mobile unit UE, base station BS₁ can possibly be selected based on QoS and overall network traffic considerations.

As indicated in step 208, once selected, the selected base station directs its transmission of downlink common channels towards the mobile unit as shown in Figure 1b. The base station is preferably provided with a beamforming antenna for this purpose and the direction of the beam is preferably base on an estimate of the mobile unit's location. Directional antennas, switched beam antennas, phased array antennas or other types of antenna systems can be provided so that a beam from a base station antenna for transmission and/or reception covers a particular geographic area of a specific shape and size. The location estimate can be derived in a number of ways, but is preferably based upon information related to reception of the sounding pulse by one or more base stations. Quantitative measurements of beam strength and/or angle of reception from one or more base stations can be used in a conventional manner to calculate a relative mobile unit location. In a 3GPP type system, this may be done at either the RNC or the Node B. Alternatively, geolocation data may be attached to the sounding pulse by the mobile unit and a relative position determined by comparison with the known location of the selected base station's antenna. The mobile unit may be equipped with a Global Positioning System (GPS) for this purpose.

The sounding pulse is a physical signal that is preferably transmitted using an isotropic antenna, which is an antenna that radiates or receives equally in all directions, but if the mobile unit has beamforming capabilities it can also be a sweeping beam transmitting a series of sounding pulses through 360 degrees. The form of the sounding pulse is preferably dependent on the radio access technology. For example, in CDMA-based systems, a very short duration burst spanning multiple chips, a short chip sequence, can represent the sounding pulse.

The timing for the sounding pulse depends on the implementation and realization of the physical signal, which depends on radio access technology. Each wireless communication medium requires a different pulse timing structure. For example, a FDD-CDMA sounding pulse would be different than a TDD-CDMA sounding pulse.

The physical signal that defines the sounding pulse itself may be realized with an Aloha or slotted Aloha technique. In an Aloha-like technique, the mobile unit simply transmits the sounding pulse burst whenever it wants to. There are no timing restrictions in the Aloha-like system. If the mobile unit does not get a response from a base station, this is considered a "connect" failure. A back-off procedure is then implemented. This procedure essentially retries to connect after the mobile unit waits a random amount of time until retransmitting.

In the slotted Aloha-like technique, the mobile unit transmits the sounding pulse at specific timeslots. This technique requires some sort of master timing. In case of failure, the back-off procedure corresponds to a mobile unit waiting a random number of timeslots until which the mobile unit retransmits.

In some situations, multiple mobile units may pulse at the same time to acquire the attention of the same RAN. When this occurs and the Node Bs can differentiate the signals from both mobile units, the RAN selects node Bs to direct common channels towards each mobile unit. If the Node Bs cannot differentiate the signals from each mobile unit, the RAN cannot make a proper Node B selection to direct the common channels toward each mobile unit. In this case, the selection preferably awaits the next pulse transmitted by each mobile unit. To ensure that subsequent pulses from these mobile units do not collide, a preferred back-off procedure for the mobile units includes waiting a random amount of time before retransmitting a sounding pulse, thus avoiding another collision. Successive pulses may be at increased power as discussed in the variation below.

In the context of an ongoing communication between a mobile unit and a network base station, various events may occur which makes it desirable to switch the communication to another base station thereby requiring a seamless handover. An event which causes a handover radio link procedure is known as a trigger. Handover triggers are very well known in the field of wireless communications. The actions subsequent to handover trigger when neighboring beacon channels are available are well known in the field of wireless communications. However, where beamforming is used in connection with beacon channels to only direct the beacon channels to selected areas within the total area serviced by a base station, conventional handover becomes problematic.

Also, trigger substitutes can be used for handover determination when beacon channels are not available. Such substitutes may comprise the received signal code power (RSCP), the signal to interference ratio (SIR), interference signal code power (ISCP) or other measurements of a downlink or uplink transmission within the cell serviced by the base station through with which the mobile unit is communicating.

In addition, a periodic monitoring mechanism for evaluating the possibility of a handover can be employed as a handover trigger. For example, if the network employs sweeping beacon channel transmissions from base stations, as a mobile unit approaches another cell(s), it may receive cyclic sweeping beacon channel signals of one or more nearby base stations without directing a receiving beam toward such other base stations. In such case, receipt of a beacon signal by the mobile unit from another base station that meets a predetermined characteristic, such as a minimum power level, can serve as a handover trigger.

When a handover trigger occurs, the mobile unit can use the initiation procedure as described above in connection with Figure 2 for selecting a base station to which its ongoing communication is transferred. The procedure can be modified since at least a general location of the mobile unit is known, i.e. the mobile unit is within the geographic area serviced by the base station through which it is communicating. Additionally, where geolocation techniques are employed, the base station's RAN will know the physical location of the mobile unit with fairly high precision. Accordingly, in conjunction with the sounding pulse step 202, the RAN preferably directs neighboring base stations to direct beacon channels in the vicinity of the mobile.

The known vicinity of the mobile can comprise the entire cell sector of the base station with which the mobile unit is communicating or, where a more precise location of the mobile unit is known, a small area surrounding the mobile. The degree of precision of mobile location position is used in determining whether the neighboring base stations radiate beacon channels using a relatively wide beam towards the mobile unit's location or a more highly focused beam, to ensure that the beacon channel signals encompass the mobile unit's location.

Alternatively, upon handover trigger, the RAN can direct neighboring base stations to begin sweeping the beacon channels through 360 degrees or a calculated arc that encompasses the mobile unit location according to a specified pattern in conjunction with the mobile unit emitting a sounding pulse, step 202. The base station for handover is then selected by performing the remaining selection steps outlined above.

With geolocation information of the mobile unit's position, the RAN can command handover based strictly on position using an adaptive look-up map. This adaptive look-up map for a given location can be generated and/or updated through observation and measurement based on the quality of previous connections at the same location. An adaptive look-up map can also be employed to determine the identity of the neighboring base stations with which the RAN communicates in connection with step 202 as explained in connection with the handover procedures above.

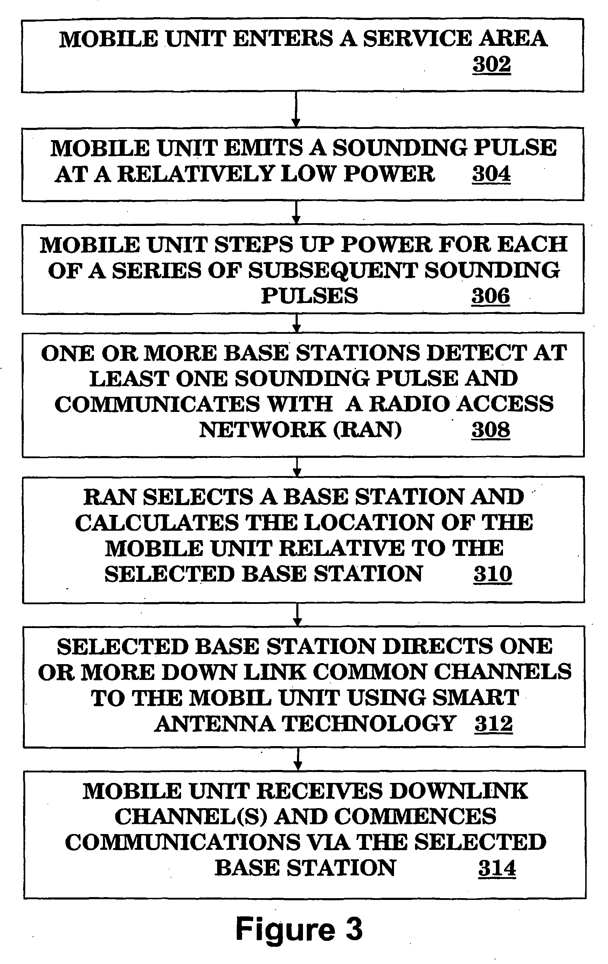

A variation of the procedure illustrated in Figure 2 is set forth in Figure 3. Once the mobile unit enters a network service area, step 302, it emits a first sounding pulse at a low power, step 304. However, instead of a single pulse, the mobile unit emits a series of pulses and gradually steps up the transmission power during the emission of the series of sounding pulses, step 306. Preferably, each successive pulse is transmitted with a greater power than its immediate predecessor pulse.

One or more base stations which each detect at least one sounding pulse communicates its sounding pulse reception information to a RAN, step 308. The RAN selects one of the base stations and calculates the relative location of the mobile unit, step 310. The selected base station then directs one or more down link common channels to the mobile unit using smart antenna technology, step 312. The mobile unit then receives the downlink channels and can then commence communications with another unit via the selected base station, step 314.

In either embodiment, upon detection of a sounding pulse, the radio access network (RAN) preferably uses measurements performed on the sounding pulse to subsequently direct the selected base station's transmission of one or many downlink common channels using a smart antenna. For example, the received signal power of the sounding pulse and the angle of arrival of the signal relative to a single base station can be used to determine the position of the mobile unit and the direction towards which common channels should be radiated using smart antennas. However, the RNC can correlate data received from all of the base stations that communicate reception of the sounding pulse to make a more accurate calculation of the mobile unit's geographic location.

Relating the modified procedure to the context of handover, the entry into service step 302 is simply replaced by a step of the occurrence of a handover trigger with respect to an ongoing communication conducted by a mobile unit. The steps are then followed to select the handover base station. Again, since at least a general location of the mobile unit is known, the procedure can be enhanced by the RAN directing neighboring base stations to direct beacon channel signals toward the mobile unit's position or initiate sweeping beacon channels at neighboring base station in conjunction with the mobile unit's emission of sounding pulses per steps 304 and 306.

A mobile unit preferably makes its presence known to a RAN upon power-up or when entering a UTRAN service area. Accordingly, the base stations must listen for sounding pulses at regular time intervals or continuously in order to detect the emergence of new mobile units. In addition, in order to maintain a relationship with a particular base station, mobile units that are camped out on a particular base station, i.e. not actively conducting communications, preferably schedule periodic pulses to ensure tracking of the location of the mobile unit so communications directed to such mobile unit can be promptly connected.

In order to facilitate the transmission and detection of the sounding pulse, certain downlink common channels providing timing information with respect to access opportunities for the uplink sounding pulse may be transmitted using omnidirectional antennas. However, this is preferably only performed if the coverage of such synchronization channels can be assured without sacrificing downlink capacity.

In a variation of the Figure 3 embodiment, a series of sounding pulses are sent according to a power ramp-up procedure as follows. A mobile unit transmits an initial sounding pulse at a low power level as in step 304. After a period of time without reception of a reply from a base station, the mobile unit will step up the transmitted power and retry its sounding pulse. The procedure is repeated until a sufficient downlink communication from a base station is received. In other words, step 306 is skipped, or stopped, once steps 308, 310 and 312 are performed. The amount of time until the transmission of a "stepped-up" higher power sounding pulse can either be fixed or determined from a random back-off process performed by the mobile unit. Additionally, the amount of power increase for each step can also be fixed or variable.

In addition to or as an alternative to transmitting a sounding pulse upon entry into a service area, the mobile unit can be configured to transmit a sounding pulse when the received signal code power (RSCP) of one or more selected common channels falls below a certain threshold level. Also, once the radio access network has determined the location of the mobile unit, registration and authentication information is preferably exchanged between the network and the mobile unit. Network registration is preferably performed using conventional protocols as in current wireless systems.

While the invention relates to the usage of smart antennas on the downlink of the common channels, uplink registration and authentication information is not required to be transmitted using smart antennas. During further idle mode operation, which includes monitoring of pages, updates of system and broadcast information, network synchronization and other procedures are ensured through a mechanism that employs sounding pulses to track displaced mobiles. A displaced mobile is a mobile unit that has moved out from beneath the penumbra of the focused antenna of the base station that had been selected for communication with the mobile unit.

As in discontinuous reception for conventional UMTS systems, an idle-mode mobile unit must "wake-up" and acquire one or many common channels such as a paging channels or updates to system information on a broadcast channel (BCH). If the received power on desired common channel(s) is insufficient, the mobile unit can be configured to transmit a sounding pulse such that the radio access network can redirect the transmission of common channels using a base station's smart antenna.

Another application is realized for mobile units which employ a conventional DRX cycle. A DRX cycle is a mode a mobile unit reverts to when it loses contact with the network. If a mobile unit becomes disconnected from the network, the mobile unit will preferably periodically transmit a sounding pulse every DRX cycle prior to the acquisition of common channels in accordance with the invention as described above.

As a mobile unit traverses through a coverage area and more specifically upon leaving the coverage area of a given cell, there is a need for reselection of an appropriate base station for facilitating communications with the mobile unit. This can be done in accordance with the process described above using a base station interface device such as a 3GPP RNC. As an alternative, a mobile unit can be configured to be capable of selecting or reselecting a base station itself.

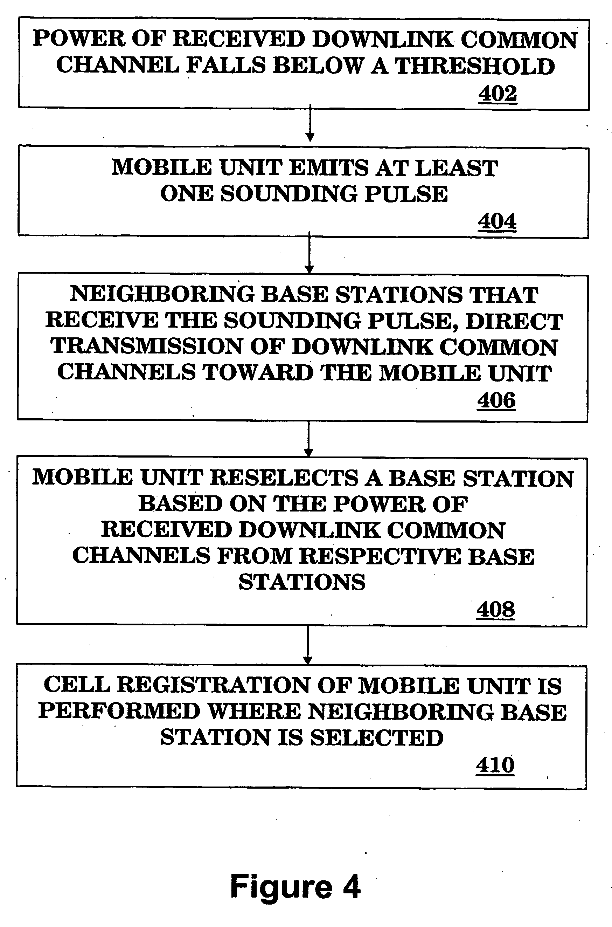

While a mobile unit self-selection is equally applicable for initiating wireless communication, a mobile unit self-selecting reselection procedure in accordance with the second embodiment of the present invention is set forth in Figure 4. In the case of reselection, the mobile unit monitors the received power of a downlink common channel transmitted by a currently selected base station to determine if it drops below a pre-selected threshold, step 402. This can be a handover trigger for an ongoing communication. When the threshold is passed, the mobile unit transmits a sounding pulse, step 404. Upon reception of the sounding pulse, neighboring base stations that receive the pulse direct the transmission of downlink common channels toward the mobile unit, step 406. Where step 402 is a handover trigger, the RAN for the base station with which the mobile unit is communicating can command neighboring base stations to direct beacon channel signals toward the mobile unit's position or initiate sweeping beacon channels at neighboring base station in conjunction with the mobile unit's emission of at least one sounding pulses per step 404. In the former case, the RAN command eliminates the need for directing of beacon channels per step 406.

Figure 1c represents the case where base station BS₁ was previously selected for servicing communications for mobile unit UE which has emitted a sounding pulse after moving out of the nominal cell serviced by that base station. The figure illustrates base stations BS₂ and BS₄, directing downlink common channels, for example a beacon channel, toward mobile unit UE. This can be based on the method outlined in Figure 4 where the base stations BS₂ and BS₄ have received the sounding pulse emitted per step 402 or the handover variation where the RAN has commanded base stations BS₂ and BS₄ to direct formed beams towards the mobile unit location. In this alternate embodiment, the mobile unit selects a base station based upon a comparison of the reception of downlink common channels from such neighboring base stations, step 408. Preferably, a cell registration process is then performed via the newly selected base station to properly redesignate the mobile units location with respect to the network, step 410.

The radio access network can control which cell a mobile unit selects by virtue of its control of the base station transmissions. Upon reception of the sounding pulse from multiple base stations, a RNC can estimate the location of the mobile unit using triangulation techniques and measurements from all base stations on the sounding pulse. The radio network controller can utilize the location of the mobile unit to direct the transmission of common channels from only one base station, i.e. the one to which the RNC chooses that the mobile unit should select. This type of control is particularly useful when evaluating overall network usage and capacity of particular node Bs so in order to provide a better utilization of network resources at a given time.

The sounding pulses can be generated at a frequency outside normal uplink and downlink telecom frequencies, thereby alleviating frequency congestion. For example, in a current deployment of CDMA, the mobile units are normally assigned channels at least 1.25 MHz apart, providing about 42 channels under current frequency allocation scheme. Typically, the uplink transmit frequency is 45 MHz lower than the downlink transmit frequency. The sounding pulses are preferably then assigned to a frequency in close proximity to the uplink or downlink, but not on the same frequency as either the uplink or downlink transmissions.

Normally the sounding pulse is preferably a simple short signal, containing no specific information, but optionally the sounding pulse can contain identification information from the mobile unit. With such information, the base stations can readily determine and distinguish between pulses concurrently received from more than one mobile unit. This information can indicate the reason for which the mobile wants to connect to the network. For example, the mobile unit may want to simply register with the network or it may wish to set up a call.

Other variations and alternatives will be apparent to those skilled in the art and are considered to be within the scope of the present invention.

## Claims

1. A method of providing handover of a wireless communication with a mobile unit conducted via a first base station to a second base station in a radio network having a plurality of base stations, each providing wireless communication services for mobile units in a respective geographic coverage area that may or may not overlap with the geographic coverage areas of other of the base stations, and an interface connected to the base stations, the method comprising the step of detecting a handover trigger event during the mobile unit's wireless communication via the first base station and further being **characterized in that** it comprises the steps of:
receiving (204) an omnidirectional sounding pulse from the mobile unit upon occurrence of the handover trigger event;
communicating (204) information related to the detected sounding pulse to the interface by each base station detecting the sounding pulse;
selecting (206), at the interface, the second base station from the base stations that detected the sounding pulse based on the communicated information; and
continuing (208) the mobile unit's wireless communication via the selected second base station.

2. The method of claim 1 wherein each base station has a selectively operable beamforming antenna, further comprising:
determining (310) a relative location of the mobile unit with respect to the beamforming antennas of base stations neighboring the first base station and directing (312) beacon channels of the neighboring base stations toward the mobile unit location to receive the sounding pulse.

3. The method of claim 1 wherein each base station has a selectively operable beamforming antenna, further comprising:
determining (310) a relative location of the mobile unit with respect to the beamforming antennas of base stations neighboring the first base station and commanding (312) the neighboring base stations to sweep beacon channels over an arc encompassing the mobile unit location to receive the sounding pulse.

4. The method of claim 1 wherein:
the radio network is a UMTS Terrestrial Radio Access Network [UTRAN], each base station is a Node B, the interface is a Radio Network Controller [RNC] and the mobile unit is a mobile User Equipment [UE];
the communicating information is between Node Bs and the RNC via an Iub or combination Iub/Iur interface;
the second base station selection is performed by the RNC by selecting a second Node B; and
the UE's communication continued via the second Node B is via a Uu interface.

5. The method of claim 4 wherein each Node B has a selectively operable beamforming antenna, further comprising:
determining (310) a relative location of the UE with respect to the beamforming antennas of Node Bs neighboring the first Node B and directing (312) beacon channels of the neighboring Node Bs toward the UE location to receive the sounding pulse.

6. The method of claim 4 wherein each Node B has a selectively operable beamforming antenna, further comprising:
determining (310) a relative location of the UE with respect to the beamforming antennas of Node Bs neighboring the first Node B and commanding (312) the neighboring Node Bs to sweep beacon channels over an arc encompassing the UE location to receive the sounding pulse.

7. The method of claim 4 wherein each Node B has a selectively operable beamforming antenna, further comprising:
determining (310) a relative location of the UE with respect to the beamforming antenna of the selected second Node B based on information related to the detected sounding pulse whereby the continuing (314) of the UE's communication via the second Node B includes operating the selected Node B's antenna to form a communication beam for at least one dedicated channel covering a selected portion of the coverage area serviced by the second Node B that encompasses the determined relative location of the UE.

8. The method of claim 4 wherein the UE has a selectively operable beamforming antenna further comprising:
determining (310) a relative location of the second Node B with respect to the beamforming antenna of the UE based on information related to the detected sounding pulse whereby the continuing (314) of the UE's communication via the second Node B includes operating the UE's antenna to form a communication beam toward the second Node B.

9. The method of claim 1 wherein each base station has a selectively operable beamforming antenna, further comprising:
determining (310) a relative location of the mobile unit with respect to the beamforming antenna of the selected base station based on information related to the detected sounding pulse whereby the continuing (314) of the mobile unit's communication via the second base station includes operating the selected base station's antenna to form a communication beam covering a selected portion of the coverage area serviced by the selected base station that encompasses the relative location of the mobile unit.

10. The method of claim 9 wherein the formed communication beam carries common channels and the operating the selected base station's antenna to form a communication beam that encompasses the relative location of the mobile unit is conducted such that other mobile units with which the selected base station is conducting wireless communication are also encompassed within the formed communication beam so that the formed beam provides common channel service to a plurality of mobile units.

11. The method of claim 1 wherein the mobile unit has a selectively operable beamforming antenna and transmitting (202) an omnidirectional sounding pulse from the mobile unit is performed by transmitting (306) multiple sounding pulses that sweep through 360 degrees or a set of calculated arcs

12. The method of claim 1 wherein the mobile unit is equipped with a global positioning system [GPS] and transmitting (202) of an omnidirectional sounding pulse includes transmitting of mobile unit location information associated with the sounding pulse transmitted by the mobile unit and/or includes transmitting of identification information associated with the sounding pulse transmitted by the mobile unit.

13. The method of claim 1 wherein transmitting (202) of an omnidirectional sounding pulse includes transmitting (306) a subsequent sounding pulse of increased power by the mobile unit if handover does not occur within a predefined time period from its transmitting of an omnidirectional sounding pulse.

14. The method of claim 1 wherein transmitting (202) of an omnidirectional sounding pulse includes transmitting (306) a series of omnidirectional sounding pulses of increasing power from the mobile unit.

15. A communication network for wireless communication with mobile units comprising a plurality of base stations, each providing wireless communication services in a geographic coverage area that may or may not overlap with the geographic coverage areas of other of the base stations, said network being **characterized in that** it comprises:
at least one base station interface connected to the base stations such that each base station has a controlling interface associated with its base station to mobile unit wireless communications;
each base station configured to detect (204) omnidirectional sounding pulses emitted from mobile units in order to establish wireless communication with such mobile units upon occurrence of a handover trigger event;
each base station configured to communicate (204) information related to a detected sounding pulse from a mobile unit to a selected interface;
each interface, when acting as a controlling interface for a serving base station where a communication of a communicating mobile unit is conducted via the serving base station, configured to select (206) a handover base station for continuing the wireless communication of the communicating mobile unit based on information communicated from each base station that detected a sounding pulse emitted from the communicating mobile unit during the communication with the serving base station; and
each base station configured to direct (208) a communication beam when selected as the handover base station for a communicating mobile unit to continue the communicating mobile unit's wireless communication via the handover base station.

16. The communication network of claim 15 wherein each base station has a selectively operable beamforming antenna and each interface, when acting as a controlling interface for a serving base station where a communication of a communicating mobile unit is conducted via the serving base station, is configured to command (312) base stations neighboring the serving base station to direct beacon channels of the neighboring base stations toward a determined location of the communicating mobile unit to receive the transmitted sounding pulse.

17. The communication network of claim 15 wherein each base station has a selectively operable beamforming antenna and each interface, when acting as a controlling interface for a serving base station where a communication of a communicating mobile unit is conducted via the serving base station, is configured to command (312) base stations neighboring the serving base station to sweep beacon channels over an arc encompassing a determined location of the communicating mobile unit to receive the transmitted sounding pulse.

18. The communication network of claim 15 wherein the radio network is a UMTS Terrestrial Radio Access Network [UTRAN], each base station is a Node B configured to communicate with mobile units configured as mobile User Equipments [UEs] via a Uu interface, and each base station interface is a Radio Network Controller [RNC] configured for communicating information with the Node Bs via an Iub interface or combination Iub/Iur interface in connection with another RNC.

19. The communication network of claim 18 wherein each Node B has a selectively operable beamforming antenna configurable to direct (312) a communication beam covering a selected portion of the coverage area serviced by the Node B that encompasses the relative location of a communicating UE when that Node B is selected as the handover Node B for a wireless communication of the communicating UE.

20. The communication network of claim 19 wherein each Node B is configured to operate its antenna to form a communication beam that carries common channels that encompasses the relative location of a plurality of UEs so that the formed beam provides common channel service to a plurality of UEs.

21. The communication network of claim 15 wherein:
each base station has a selectively operable beamforming antenna,
each interface, when acting as a controlling interface for a serving base station where a communication of a communicating mobile unit is conducted via the serving base station, is configured to determine (310) a relative location of the communicating mobile unit so that the interface can command (312) neighboring base stations of the serving base station to selectively direct their beamforming antennas towards the determined relative location of the communicating mobile unit when the mobile unit is to emit (304) a sounding pulse for initiating handover.

22. The communication network of claim 21 further comprising mobile units, each configured to transmit (202) an omnidirectional sounding pulse to initiate handover from a serving base station to a handover base station.

23. The communication network of claim 22 wherein the mobile units are each configured to monitor the power level of a directed communication beam from a base station that is received by the mobile unit and to transmit (202) an omnidirectional sounding pulse if the monitored power level falls below a predefined level.

24. The communication network of claim 22 wherein each mobile unit is configured to transmit (306) a subsequent omnidirectional sounding pulse if a directed communication beam is not received from a handover base station within a predefined time period from transmitting an omnidirectional sounding pulse.

25. The communication network of claim 22 wherein each mobile unit is equipped with a global positioning system [GPS] and is configured to transmit an omnidirectional sounding pulse that includes mobile unit location information determined by its GPS and/or mobile unit identification information.

26. The communication network of claim 22 wherein each mobile unit has a selectively operable beamforming antenna configured to transmit (202)an omnidirectional sounding pulse by transmitting (306) multiple sounding pulses that sweep through 360 degrees or a set of calculated arcs.

27. The communication network of claim 22 wherein each mobile unit is configured to transmit (306) a subsequent sounding pulse of increased power if sufficient information to affect handover is not received within a predefined time period from its transmitting (202) of an omnidirectional sounding pulse.

28. The communication network of claim 15, each interface being configured to select (206) the handover base station based on reception of information communicated from base stations responding to the sounding pulse within a predefined time period from its emission (202) from the communicating mobile unit.

29. A method for handover of a wireless communication conducted by a communicating mobile unit via a serving base station to a handover base station in a radio network having a plurality of base stations, each providing wireless communication services in a respective geographic coverage area that may or may not overlap with the geographic coverage areas of other of the base stations, the method being **characterized in that** it comprises the steps of:
transmitting (404) an omnidirectional sounding pulse from the communicating mobile unit during the wireless communication upon the occurrence of a triggering event;
receiving (406), at the mobile unit, a communication beam from base stations detecting the sounding pulse;
selecting (408) a handover base station from the base stations that detected the sounding pulse based on the communication beams received by the mobile unit; and
continuing (410) the wireless communication via the selected handover base station.

30. The method of claim 29 wherein the radio network has an interface connected to the base stations, further comprising:
communicating (204) information related to the detected sounding pulse to the interface by each base station detecting the sounding pulse;
choosing (206) one or more of the base stations that detected the sounding pulse for responding to the mobile unit sounding pulse based on the communicated information so that only the chosen base stations direct a communication beam to the mobile unit.

31. The method of claim 30 wherein:
the radio network is a UMTS Terrestrial Radio Access Network [UTRAN], each base station is a Node B, the interface is a Radio Network Controller [RNC] and the mobile unit is a mobile User Equipment [UE];
the communicating information is between Node Bs and the RNC via an Iub or combination Iub/Iur interface; and
the communication of the UE via Node Bs is via a Uu interface.

32. The method of claim 31 wherein each Node B has a selectively operable beamforming antenna, further comprising:
determining (310) a relative location of the UE with respect to the beamforming antenna of each sounding pulse detecting Node B based on information related to the detected sounding pulse whereby directing (312) of a communication beam towards the UE includes operating the respective Node Bs' antennas to form communication beams that each cover a selected portion of the coverage area serviced by the respective Node B that encompasses the relative location of the UE.

33. The method of claim 29 wherein each base station has a selectively operable beamforming antenna, further comprising:
determining (310) a relative location of the communicating mobile unit with respect to the beamforming antenna of each sounding pulse receiving base station based on information related to the detected sounding pulse whereby directing (312) of a communication beam towards the mobile unit includes operating the respective base station's antenna to form a communication beam covering a selected portion of the coverage area serviced by the respective base station that encompasses the relative location of the mobile unit.

34. The method of claim 33 wherein each respective formed communication beam carries common channels and the operating of each respective base station's antenna to form a communication beam that encompasses the relative location of the mobile unit is conducted such that other mobile units with which the respective base station is conducting wireless communication are also encompassed within the formed communication beam.

35. The method of claim 29 wherein the mobile unit has a selectively operable beamforming antenna and the transmitting (202) an omnidirectional sounding pulse from the mobile unit is performed by transmitting (306) multiple sounding pulses that sweep through 360 degrees or a set of calculated arcs

36. The method of claim 29 wherein the mobile unit is equipped with a global positioning system [GPS] and the transmitting (202) of an omnidirectional sounding pulse includes transmitting (306) of mobile unit location information associated with the sounding pulse transmitted by the mobile unit and/or includes transmitting of identification information associated with the sounding pulse transmitted the mobile unit.

37. The method of claim 29 wherein the transmitting (202) of an omnidirectional sounding pulse includes transmitting (306) a series of omnidirectional sounding pulses of increasing power from the mobile unit.

38. A mobile unit for use in a radio network having a plurality of base stations, each base station providing wireless communication services in a respective geographic coverage area that may or may not overlap with the geographic coverage areas of other of the base stations, the mobile unit being **characterized in that** it comprises:
a transmitter configured to transmit (404) an omnidirectional sounding pulse based on the occurrence of a triggering event during a wireless communication conducted via a serving base station;
a receiver configured to receive (406) communication beams from base stations that detected a sounding pulse transmitted by the mobile unit; and
a processor configured to select (408) a handover base station via which the mobile unit is to continue the wireless communication based on communication beams received by the mobile unit from base stations that detected the sounding pulse transmitted by the mobile unit.

39. The mobile unit of claim 38 wherein the mobile unit is configured to transmit (404) a subsequent omnidirectional sounding pulse if a communication beam is not received from a base station that detected a sounding pulse transmitted by the mobile unit within a predefined time period from transmitting an omnidirectional sounding pulse.

40. The mobile unit of claim 38 wherein the mobile unit is equipped with a global positioning system [GPS] and is configured to transmit (404) an omnidirectional sounding pulse that includes mobile unit location information determined by its GPS.

41. The mobile unit of claim 38 wherein the mobile unit is configured to transmit (404) an omnidirectional sounding pulse that includes mobile unit identification information.

42. The mobile unit of claim 38 wherein the mobile unit is configured to transmit (306) a series of omnidirectional sounding pulses of increasing power upon the occurrence of a handover trigger event.

43. The mobile unit of claim 38 wherein each mobile unit has a selectively operable beamforming antenna configured to transmit (202) an omnidirectional sounding pulse by transmitting (306) multiple sounding pulses that sweep through 360 degrees or a set of calculated arcs.

44. A communication network for wireless communication comprising a plurality of mobile units according to claim 38 and a plurality of base stations, wherein
each base station is configured to provide wireless communication services in a geographic coverage area that may or may not overlap with the geographic coverage areas of other of the base stations;
each base station is configured to detect (204) sounding pulses emitted from mobile units in order to establish wireless communication with such mobile units;
each base station is configured to communicate (208), to a mobile unit, information related to a detected sounding pulse from said mobile unit; and
each base station is configured to direct (208) a communication beam when selected as the handover base station for a communicating mobile unit to continue the communicating mobile unit's wireless communication via the handover base station.

## Patentansprüche

1. Verfahren zur Bereitstellung einer Weiterreichung einer über eine erste Basisstation geführten drahtlosen Kommunikation mit einer Mobileinheit an eine zweite Basisstation in einem Funknetzwerk mit mehreren Basisstationen, von denen jede drahtlose Kommunikationsdienste für Mobileinheiten in einem jeweiligen geographischen Abdeckungsbereich bereitstellt, der mit den geographischen Abdeckungsbereichen anderer der Basisstationen überlappen kann oder nicht, und einer mit den Basisstationen verbundenen Schnittstelle, wobei das Verfahren den Schritt des Erfassens eines Weiterreichungsauslöserereignisses während der drahtlosen Kommunikation der Mobileinheit über die erste Basisstation aufweist und ferner **dadurch gekennzeichnet ist, daß** es die folgenden Schritte aufweist:
Empfangen (204) eines omnidirektionalen Peilungsimpulses von der Mobileinheit nach dem Auftreten des Weiterreichungsauslöserereignisses;
Kommunizieren (204) von Informationen, die sich auf den erfaßten Peilungsimpuls beziehen, durch jede Basisstation, die den Peilungsimpuls erfaßt, an die Schnittstelle;
Auswählen (206) der zweiten Basisstation aus den Basisstationen, die den Peilungsimpuls erfaßt haben, an der Schnittstelle basierend auf den kommunizierten Informationen; und
Fortsetzen (208) der drahtlosen Kommunikation der Mobileinheit über die ausgewählte zweite Basisstation.

2. Verfahren nach Anspruch 1, wobei jede Basisstation eine selektiv betreibbare Strahlformungsantenne hat, das ferner aufweist:
Bestimmen (310) eines relativen Standorts der Mobileinheit in Bezug auf die Strahlformungsantennen von Basisstationen, die zu der ersten Basisstation benachbart sind, und Richten (312) von Beaconkanälen der benachbarten Basisstationen auf den Standort der Mobileinheit, um den Peilungsimpuls zu empfangen.

3. Verfahren nach Anspruch 1, wobei jede Basisstation eine selektiv betreibbare Strahlformungsantenne hat, das ferner aufweist:
Bestimmen (310) eines relativen Standorts der Mobileinheit in Bezug auf die Strahlformungsantennen der Basisstationen, die zu der ersten Basisstation benachbart sind, und den benachbarten Stationen Befehlen (312), Beaconkanäle über einen Bogen zu durchlaufen, der den Standort der Mobilstation umfaßt, um den Peilungsimpuls zu empfangen.

4. Verfahren nach Anspruch 1, wobei:
das Funknetzwerk ein terrestrisches UMTS-Zugangsnetzwerk [UTRAN] ist, jede Basisstation ein Node B ist, die Schnittstelle eine Funknetzsteuerung [RNC] ist, und die Mobileinheit ein mobiles Benutzergerät [UE] ist;
die Kommunikationsinformationen zwischen den Node Bs und der RNC über eine Iub- oder eine Iub/Iur-Kombinationsschnittstelle sind;
die Auswahl der zweiten Basisstation durch die RNC durch Auswählen eines zweiten Node B durchgeführt wird; und
die Kommunikation des UE, die über den zweiten Node B fortgesetzt wird, über eine Uu-Schnittstelle erfolgt.

5. Verfahren nach Anspruch 4, wobei jeder Node B eine selektiv betreibbare Strahlformungsantenne hat, das ferner aufweist:
Bestimmen (310) eines relativen Standorts des UE in Bezug auf die Strahlformungsantennen von Node Bs, die zu dem ersten Node B benachbart sind, und Richten (312) von Beaconkanälen der benachbarten Node Bs auf den UE-Standort, um den Peilungsimpuls zu empfangen.

6. Verfahren nach Anspruch 4, wobei jeder Node B eine selektiv betreibbare Strahlformungsantenne hat, das ferner aufweist:
Bestimmen (310) eines relativen Standorts des UE in Bezug auf die Strahlformungsantennen von Node Bs, die zu dem ersten Node B benachbart sind, und den benachbarten Stationen Befehlen (312), Beaconkanäle über einen Bogen zu durchlaufen, der den Standort der Mobilstation umfaßt, um den Peilungsimpuls zu empfangen.

7. Verfahren nach Anspruch 4, wobei jeder Node B eine selektiv betreibbare Strahlformungsantenne hat, das ferner aufweist:
Bestimmen (310) eines relativen Standorts des UE in Bezug auf die Strahlformungsantenne des ausgewählten zweiten Node B basierend auf Informationen, die sich auf den erfaßten Peilungsimpuls beziehen, wobei das Fortsetzen (314) der Kommunikation des UE über den zweiten Node B das Betreiben der Antenne des ausgewählten Node B umfaßt, um einen Kommunikationsstrahl für wenigstens einen dedizierten Kanal zu bilden, der einen ausgewählten Abschnitt des Abdeckungsbereichs abdeckt, der von dem zweiten Node B betreut wird, der den bestimmten relativen Standort des UE umfaßt.

8. Verfahren nach Anspruch 4, wobei das UE eine selektiv betreibbare Strahlformungsantenne hat, das ferner aufweist:
Bestimmen (310) eines relativen Standorts des zweiten Node B in Bezug auf die Strahlformungsantenne des UE basierend auf Informationen, die sich auf den erfaßten Peilungsimpuls beziehen, wobei das Fortsetzen (314) der Kommunikation des UE über den zweiten Node B das Betreiben der Antenne des UE umfaßt, um einen Kommunikationsstrahl zu dem zweiten Node B zu bilden.

9. Verfahren nach Anspruch 1, wobei jede Basisstation eine selektiv betreibbare Strahlformungsantenne hat, das ferner aufweist:
Bestimmen (310) eines relativen Standorts der Mobileinheit in Bezug auf die Strahlformungsantenne der ausgewählten Basisstation basierend auf Informationen, die sich auf den erfaßten Peilungsimpuls beziehen, wobei das Fortsetzen (314) der Kommunikation der Mobileinheit über die zweite Basisstation das Betreiben der Antenne der ausgewählten zweiten Basisstation umfaßt, um einen Kommunikationsstrahl zu bilden, der einen ausgewählten Abschnitt des Abdeckungsbereichs, der von der ausgewählten Basisstation betreut wird, abdeckt, der den relativen Standort der Mobileinheit umfaßt.

10. Verfahren nach Anspruch 9, wobei der ausgebildete Kommunikationsstrahl gemeinsame Kanäle befördert und das Betreiben der Antenne der ausgewählten Basisstation, um einen Kommunikationsstrahl zu bilden, der den relativen Standort der Mobileinheit umfaßt, derart ausgeführt wird, daß die anderen Mobileinheiten, mit denen die ausgewählte Basisstation drahtlose Kommunikationen ausführt, ebenfalls von dem ausgebildeten Kommunikationsstrahl umfaßt werden, so daß der ausgebildete Strahl für mehrere Mobileinheiten einen gemeinsamen Kanaldienst bereitstellt.

11. Verfahren nach Anspruch 1, wobei die Mobileinheit eine selektiv betreibbare Strahlformungsantenne hat und das Senden (202) eines omnidirektionalen Peilungsimpulses von der Mobileinheit durchgeführt wird, indem mehrere Peilungsimpulse gesendet werden (306), die 360 Grad oder einen Satz berechneter Bögen durchlaufen.

12. Verfahren nach Anspruch 1, wobei die Mobileinheit mit einem globalen Positionierungssystem [GPS] ausgerüstet ist und das Senden (202) eines omnidirektionalen Peilungsimpulses das Senden von Standortinformationen der Mobileinheit umfaßt, die zu dem von der Mobileinheit gesendeten Peilungsimpuls gehören, und/oder das Senden von Identifikationsinformationen umfaßt, die zu dem von der Mobileinheit gesendeten Peilungsimpuls gehören.

13. Verfahren nach Anspruch 1, wobei das Senden (202) eines omnidirektionalen Peilungsimpulses das Senden (306) eines anschließenden Peilungsimpulses mit erhöhter Leistung durch die Mobileinheit umfaßt, wenn die Weiterreichung nicht innerhalb einer vordefinierten Zeitspanne stattfindet, seit sie einen omnidirektionalen Peilungsimpuls gesendet hat.

14. Verfahren nach Anspruch 1, wobei das Senden (202) eines omnidirektionalen Peilungsimpulses das Senden (306) einer Reihe von omnidirektionalen Peilungsimpulsen mit zunehmender Leistung von der Mobileinheit umfaßt.

15. Kommunikationsnetzwerk für die drahtlose Kommunikation mit Mobileinheiten, das mehrere Basisstationen aufweist, von denen jede drahtlose Kommunikationsdienste in einem geographischen Abdeckungsbereich bereitstellt, der sich mit den geographischen Abdeckungsbereichen anderer Basisstationen überlappen kann oder nicht, **dadurch gekennzeichnet, daß** es aufweist:
wenigstens eine Basisstationsschnittstelle, die mit den Basisstationen verbunden ist, so daß jede Basisstation eine Steuerschnittstelle hat, die zu ihren drahtlosen Basisstation-Mobileinheit-Kommunikationen gehört;
wobei jede Basisstation konfiguriert ist, um omnidirektionale Peilungsimpulse zu erfassen (204), die von Mobileinheiten emittiert werden, um nach dem Auftreten eines Weiterreichungsauslöserereignisses die drahtlose Kommunikation mit derartigen Mobileinheiten aufzubauen;
wobei jede Basisstation konfiguriert ist, um Informationen, die sich auf einen erfaßten Peilungsimpuls von einer Mobileinheit beziehen, an eine ausgewählte Schnittstelle zu kommunizieren (204);
jede Schnittstelle, wenn sie als eine Steuerschnittstelle für eine betreuende Basisstation arbeitet, wobei eine Kommunikation einer kommunizierenden Mobileinheit über die betreuende Basisstation ausgeführt wird, konfiguriert ist, eine Weiterreichungsbasisstation zum Fortsetzen der drahtlosen Kommunikation der kommunizierenden Mobileinheit basierend auf Informationen auszuwählen (206), die von jeder Basisstation kommuniziert wurden, die einen Peilungsimpuls erfaßt hat, der von der kommunizierenden Mobileinheit während der Kommunikation mit der betreuenden Basisstation emittiert wurde; und
jede Basisstation konfiguriert ist, um einen Kommunikationsstrahl zu richten (208), wenn sie als die Weiterreichungsbasisstation für eine kommunizierende Mobileinheit ausgewählt ist, um die drahtlose Kommunikation der kommunizierenden Mobileinheit über die Weiterreichungsbasisstation fortzusetzen.

16. Kommunikationsnetzwerk nach Anspruch 15, wobei jede Basisstation eine selektiv betreibbare Strahlformungsantenne hat und jede Schnittstelle, wenn sie als eine Steuerschnittstelle für eine betreuende Basisstation arbeitet, wobei eine Kommunikation einer kommunizierenden Mobileinheit über die betreuende Basisstation ausgeführt wird, konfiguriert ist, um Basisstationen, die zu der betreuenden Basisstation benachbart sind, zu befehlen (312), Beaconkanäle der benachbarten Basisstationen auf einen bestimmten Standort der kommunizierenden Mobileinheit zu richten, um den gesendeten Peilungsimpuls zu empfangen.

17. Kommunikationsnetzwerk nach Anspruch 15, wobei jede Basisstation eine selektiv betreibbare Strahlformungsantenne hat und jede Schnittstelle, wenn sie als eine Steuerschnittstelle für eine betreuende Basisstation arbeitet, wobei eine Kommunikation einer kommunizierenden Mobileinheit über die betreuende Basisstation ausgeführt wird, konfiguriert ist, um Basisstationen, die zu der betreuenden Basisstation benachbart sind, zu befehlen (312), Beaconkanäle über einen Bogen zu durchlaufen, der einen bestimmten Standort der kommunizierenden Mobileinheit umfaßt, um den gesendeten Peilungsimpuls zu empfangen.

18. Kommunikationsnetzwerk nach Anspruch 15, wobei das Funknetzwerk ein terrestrisches UMTS-Zugangsnetzwerk [UTRAN] ist, jede Basisstation ein Node B ist, der konfiguriert ist, um mit Mobileinheiten, die als mobile Benutzergeräte [UEs] konfiguriert sind, über eine Uu-Schnittstelle zu kommunizieren, und jede Basisstation eine Funknetzsteuerung [RNC] ist, die konfiguriert ist, um Informationen mit den Node Bs über eine Iub-Schnittstelle oder eine Iub/Iur-Kombinationsschnittstelle in Verbindung mit einer anderen RNC zu kommunizieren.

19. Kommunikationsnetzwerk nach Anspruch 18, wobei jeder Node B eine selektiv betreibbare Strahlformungsantenne hat, die konfigurierbar ist, um einen Kommunikationsstrahl zu richten (312), der einen von dem Node B betreuten ausgewählten Abschnitt abdeckt, der den relativen Standort eines kommunizierenden UE umfaßt, wenn dieser Node B als der Weiterreichungs-Node B für eine drahtlose Kommunikation des kommunizierenden UE ausgewählt wird.

20. Kommunikationsnetzwerk nach Anspruch 19, wobei jeder Node B konfiguriert ist, um seine Antenne zu betreiben, um einen Kommunikationsstrahl zu bilden, der gemeinsame Kanäle befördert, der den relativen Standort mehrerer UEs umfaßt, so daß der gebildete Strahl einen gemeinsamen Kanaldienst an mehrere UEs bereitstellt.

21. Kommunikationsnetzwerk nach Anspruch 15, wobei:
jede Basisstation eine selektiv betreibbare Strahlformungsantenne hat,
jede Schnittstelle, wenn sie als eine Steuerschnittstelle für eine betreuende Basisstation arbeitet, wobei eine Kommunikation einer kommunizierenden Mobileinheit über die betreuende Basisstation ausgeführt wird, konfiguriert ist, um einen relativen Standort der kommunizierenden Mobileinheit zu bestimmen (310), so daß die Schnittstelle benachbarten Basisstationen befehlen kann (312), ihre Strahlformungsantennen selektiv auf den bestimmten relativen Standort der kommunizierenden Mobileinheit zu richten, wenn die Mobileinheit einen Peilungsimpuls zum Einleiten der Weiterreichung emittieren soll (304).

22. Kommunikationsnetzwerk nach Anspruch 21, das ferner Mobileinheiten aufweist, die jeweils konfiguriert sind, um einen omnidirektionalen Peilungsimpuls zu senden (202), um die Weiterreichung von einer betreuenden Basisstation zu einer Weiterreichungsbasisstation einzuleiten.

23. Kommunikationsnetzwerk nach Anspruch 22, wobei die Mobileinheiten jeweils konfiguriert sind, um den Leistungspegel eines gerichteten Kommunikationsstrahls von einer Basisstation, der von der Mobileinheit empfangen wird, zu überwachen und einen omnidirektionalen Peilungsimpuls zu senden (202), wenn der überwachte Leistungspegel unter einen vorgegebenen Pegel fällt.

24. Kommunikationsnetzwerk nach Anspruch 22, wobei jede Mobileinheiten konfiguriert ist, um einen anschließenden omnidirektionalen Peilungsimpuls zu senden (306), wenn von einer Weiterreichungsbasisstation innerhalb einer vordefinierten Zeitspanne seit dem Senden eines omnidirektionalen Peilungsimpulses kein anschließender gerichteter Kommunikationsstrahl empfangen wird.

25. Kommunikationsnetzwerk nach Anspruch 22, wobei jede Mobileinheit mit einem globalen Positionierungssystem [GPS] ausgestattet ist und konfiguriert ist, um einen omnidirektionalen Peilungsimpuls zu senden, der Standortinformationen der Mobileinheit, die von seinem GPS bestimmt sind, und/oder Mobileinheit-Identifikationsinformation umfaßt.

26. Kommunikationsnetzwerk nach Anspruch 22, wobei jede Mobileinheit eine selektiv betreibbare Strahlformungsantenne hat, die konfiguriert ist, um einen omnidirektionalen Peilungsimpuls zu senden (202), indem mehrere Peilungsimpulse gesendet werden (306), die 360 Grad oder einen Satz berechneter Bögen durchlaufen.

27. Kommunikationsnetzwerk nach Anspruch 22, wobei jede Mobileinheit konfiguriert ist, um einen anschließenden Peilungsimpuls mit erhöhter Leistung zu senden (306), wenn innerhalb einer vordefinierten Zeitspanne seit ihrem Senden (202) eines omnidirektionalen Peilungsimpulses keine ausreichenden Informationen empfangen werden, um die Weiterreichung herbeizuführen.

28. Kommunikationsnetzwerk nach Anspruch 15, wobei jede Schnittstelle konfiguriert ist, um die Weiterreichungsbasisstation basierend auf dem Empfang von Informationen auszuwählen (206), die von Basisstationen kommuniziert werden, die auf den Peilungsimpuls innerhalb einer vordefinierten Zeitspanne seit seiner Emission (202) von der kommunizierenden Mobileinheit antworten.

29. Verfahren zur Weiterreichung einer von einer Mobileinheit über eine betreuende Basisstation geführten drahtlosen Kommunikation an eine Weiterreichungsbasisstation in einem Funknetzwerk mit mehreren Basisstationen, von denen jede drahtlose Kommunikationsdienste in einem jeweiligen geographischen Abdeckungsbereich bereitstellt, der mit den geographischen Abdeckungsbereichen anderer der Basisstationen überlappen kann oder nicht, wobei das Verfahren **dadurch gekennzeichnet ist, daß** es die folgenden Schritte aufweist:
Senden (404) eines omnidirektionalen Peilungsimpulses von der kommunizierenden Mobileinheit während der drahtlosen Kommunikation nach dem Auftreten eines Auslöserereignisses;
Empfangen (406) eines Kommunikationsstrahls von Basisstationen, die den Peilungsimpuls erfassen, an der Mobileinheit;
Auswählen (408) einer Weiterreichungsbasisstation von den Basisstationen, die den Peilungsimpuls erfaßt haben, basierend auf den Kommunikationsstrahlen, die von der Mobileinheit empfangen werden; und
Fortsetzen (410) der drahtlosen Kommunikation über die ausgewählte Weiterreichungsbasisstation.

30. Verfahren nach Anspruch 29, wobei das Funknetzwerk eine Schnittstelle hat, die mit den Basisstationen verbunden ist, das ferner aufweist:
Kommunizieren (204) von Informationen, die sich auf den erfaßten Peilungsimpuls beziehen, durch jede Basisstation, die den Peilungsimpuls erfaßt, an die Schnittstelle;
Auswählen (206) einer oder mehrerer der Basisstationen, die den Peilungsimpuls erfaßt haben, zum Antworten auf den Mobileinheits-Peilungsimpuls basierend auf den kommunizierten Informationen, so daß nur die ausgewählten Basisstationen einen Kommunikationsstrahl auf die Mobileinheit richten.

31. Verfahren nach Anspruch 30, wobei:
das Funknetzwerk ein terrestrisches UMTS-Zugangsnetzwerk [UTRAN] ist, jede Basisstation ein Node B ist, die Schnittstelle eine Funknetzsteuerung [RNC] ist, und die Mobileinheit ein mobiles Benutzergerät [UE] ist;
die Kommunikationsinformationen zwischen den Node Bs und der RNC über eine Iub- oder eine Iub/Iur-Kombinationsschnittstelle laufen; und
die Kommunikation des UE über Node Bs über eine Uu-Schnittstelle erfolgt.

32. Verfahren nach Anspruch 31, wobei jeder Node B eine selektiv betreibbare Strahlformungsantenne hat, das ferner aufweist:
Bestimmen (310) eines relativen Standorts des UE in Bezug auf die Strahlformungsantenne jedes Node B, der Peilungsimpulse erfaßt, basierend auf Informationen, die sich auf den erfaßten Peilungsimpuls beziehen, wobei das Richten (312) eines Kommunikationsstrahls auf das UE das Betreiben der Antennen der jeweiligen Node Bs derart umfaßt, daß sie Kommunikationsstrahlen bilden, die jeweils einen ausgewählten Abschnitt des von dem jeweiligen Node B betreuten Abdeckungsbereichs abdecken, welcher den relativen Standort des UE umfaßt.

33. Verfahren nach Anspruch 29, wobei jede Basisstation eine selektiv betreibbare Strahlformungsantenne hat, das ferner aufweist:
Bestimmen (310) eines relativen Standorts der kommunizierenden Mobileinheit in Bezug auf die Strahlformungsantenne jeder Basisstation, die einen Peilungsimpuls empfängt, basierend auf Informationen, die sich auf den erfaßten Peilungsimpuls beziehen, wobei das Richten (312) eines Kommunikationsstrahls auf die Mobilstation das Betreiben der Antenne der jeweiligen Basisstation derart umfaßt, daß ein Kommunikationsstrahl gebildet wird, der einen ausgewählten Abschnitt des von der jeweiligen Basisstation betreuten Abdeckungsbereichs abdeckt, welcher den relativen Standort der Mobileinheit umfaßt.

34. Verfahren nach Anspruch 33, wobei jeder jeweils ausgebildete Kommunikationsstrahl gemeinsame Kanäle befördert und das Betreiben der Antenne jeder jeweiligen Basisstation, um einen Kommunikationsstrahl zu bilden, der den relativen Standort der Mobileinheit umfaßt, derart ausgeführt wird, daß andere Mobileinheiten, mit denen die jeweilige Basisstation drahtlose Kommunikationen ausführt, ebenfalls von dem ausgebildeten Kommunikationsstrahl umfaßt werden.

35. Verfahren nach Anspruch 29, wobei die Mobileinheit eine selektiv betreibbare Strahlformungsantenne hat und das Senden (202) eines omnidirektionalen Peilungsimpulses von der Mobileinheit durchgeführt wird, indem mehrere Peilungsimpulse gesendet werden (306), die 360 Grad oder einen Satz berechneter Bögen durchlaufen.

36. Verfahren nach Anspruch 29, wobei die Mobileinheit mit einem globalen Positionierungssystem [GPS] ausgerüstet ist und das Senden (202) eines omnidirektionalen Peilungsimpulses das Senden (306) von Standortinformationen der Mobileinheit umfaßt, die zu dem von der Mobileinheit gesendeten Peilungsimpuls gehören, und/oder das Senden von Identifikationsinformationen umfaßt, die zu dem von der Mobileinheit gesendeten Peilungsimpuls gehören.

37. Verfahren nach Anspruch 29 wobei das Senden (202) eines omnidirektionalen Peilungsimpulses das Senden (306) einer Reihe von omnidirektionalen Peilungsimpulsen mit zunehmender Leistung von der Mobileinheit umfaßt.

38. Mobileinheit für die Verwendung in einem Funknetzwerk mit mehreren Basisstationen, wobei jede Basisstation drahtlose Kommunikationsdienste in einem jeweiligen geographischen Abdeckungsbereich bereitstellt, der mit den geographischen Abdeckungsbereichen anderer der Basisstationen überlappen kann oder nicht, wobei die Mobileinheit **dadurch gekennzeichnet ist, daß** sie aufweist:
einen Sender, der konfiguriert ist, um basierend auf dem Auftreten eines Auslöseereignisses während einer über eine betreuende Basisstation geführten drahtlosen Kommunikation einen omnidirektionalen Peilungsimpuls zu senden (404);
einen Empfänger, der konfiguriert ist, um Kommunikationsstrahlen von Basisstationen zu empfangen (406), die einen von der Mobileinheit gesendeten Peilungsimpuls erfasst haben;
einen Prozessor, der konfiguriert ist, um basierend auf Kommunikationsstrahlen, die die Mobileinheit von Basisstationen empfängt, die den von der Mobileinheit gesendeten Peilungsimpuls erfaßt haben, eine Weiterreichungsbasisstation auszuwählen (408), über die die Mobilstation die drahtlose Kommunikation fortsetzen soll.

39. Mobileinheit nach Anspruch 38, wobei die Mobileinheit konfiguriert ist, um einen anschließenden omnidirektionalen Peilungsimpuls zu senden (404), wenn innerhalb einer vordefinierten Zeitspanne seit dem Senden eines omnidirektionalen Peilungsimpulses kein Kommunikationsstrahl von einer Basisstation empfangen wird, die einen von der Mobileinheit gesendeten Peilungsimpuls erfaßt hat.

40. Mobileinheit nach Anspruch 38, wobei die Mobileinheit mit einem globalen Positionierungssystem [GPS] ausgestattet ist und konfiguriert ist, um einen omnidirektionalen Peilungsimpuls, der von ihrem GPS bestimmte Standortinformationen der Mobileinheit umfaßt, zu senden (404).

41. Mobileinheit nach Anspruch 38, wobei die Mobileinheit konfiguriert ist, um einen omnidirektionalen Peilungsimpuls, der Mobileinheit-Identifikationsinformationen enthält, zu senden (404).

42. Mobileinheit nach Anspruch 38, wobei die Mobileinheit konfiguriert ist, um nach dem Auftreten eines Weiterreichungsauslöserereignisses eine Reihe omnidirektionaler Peilungsimpulse mit zunehmender Leistung zu senden (306).

43. Mobileinheit nach Anspruch 38, wobei jede Mobileinheit eine selektiv betreibbare Strahlformungsantenne hat, die konfiguriert ist, um einen omnidirektionalen Peilungsimpuls zu senden (202), indem sie mehrere Peilungsimpulse sendet (306), welche 360 Grad oder einen Satz berechneter Bögen durchlaufen.

44. Kommunikationsnetzwerk für drahtlose Kommunikation, das mehrere Mobileinheiten gemäß Anspruch 38 und mehrere Basisstationen aufweist, wobei:
jede Basisstation konfiguriert ist, um drahtlose Kommunikationsdienste in einem geographischen Abdeckungsbereich bereitzustellen, der mit den geographischen Abdeckungsbereichen anderer der Basisstationen überlappen kann oder nicht;
jede Basisstation konfiguriert ist, um Peilungsimpulse zu erfassen (204), die von Mobileinheiten emittiert werden, um die drahtlose Kommunikation mit derartigen Mobileinheiten einzurichten;
jede Basisstation konfiguriert ist, um an eine Mobileinheit Informationen zu kommunizieren (208), die sich auf einen erfaßten Peilungsimpuls von der Mobileinheit, beziehen; und
jede Basisstation konfiguriert ist, um einen Kommunikationsstrahl zu richten (208), wenn sie als die Weiterreichungsbasisstation für eine kommunizierende Mobileinheit ausgewählt ist, um die drahtlose Kommunikation der kommunizierenden Mobileinheit über die Weiterreichungsbasisstation fortzusetzen.

## Revendications

1. Procédé de fourniture de transfert d'une communication sans fil, effectuée par l'intermédiaire d'une première station de base, avec une unité mobile vers une deuxième station de base dans un réseau radio ayant une pluralité de stations de base, chacune fournissant des services de communication sans fil pour des unités mobiles dans une zone de couverture géographique respective qui peut chevaucher ou pas les zones de couverture géographique d'autres stations de base, et une interface connectée aux stations de base, le procédé comprenant l'étape consistant à détecter un événement de déclenchement de transfert au cours de la communication sans fil de l'unité mobile par l'intermédiaire de la première station de base, et étant **caractérisé de plus par le fait qu'**il comprend les étapes consistant à :
recevoir (204) une impulsion de sondage omnidirectionnelle à partir de l'unité mobile lors de l'occurrence de l'événement de déclenchement de transfert ;
communiquer (204) des informations qui se rapportent à l'impulsion de sondage détectée à l'interface par chaque station de base qui détecte l'impulsion de sondage ;
sélectionner (206), au niveau de l'interface, la deuxième station de base parmi les stations de base qui ont détecté l'impulsion de sondage sur la base des informations communiquées ; et
poursuivre (208) la communication sans fil de l'unité mobile par l'intermédiaire de la deuxième station de base sélectionnée.

2. Procédé selon la revendication 1, dans lequel chaque station de base a une antenne de formation de faisceau pouvant être actionnée de manière sélective, comprenant en outre les étapes consistant à :
déterminer (310) un emplacement relatif de l'unité mobile par rapport aux antennes de formation de faisceau des stations de base au voisinage de la première station de base, et diriger (312) des canaux de balise des stations de base voisines vers l'emplacement de l'unité mobile de manière à recevoir l'impulsion de sondage.

3. Procédé selon la revendication 1, dans lequel chaque station de base a une antenne de formation de faisceau pouvant être actionnée de manière sélective, comprenant en outre les étapes consistant à :
déterminer (310) un emplacement relatif de l'unité mobile par rapport aux antennes de formation de faisceau des stations de base au voisinage de la première station de base, et imposer (312) aux stations de base voisines de balayer les canaux de balise sur un arc qui englobe l'emplacement de l'unité mobile de manière à recevoir l'impulsion de sondage.

4. Procédé selon la revendication 1, dans lequel :
le réseau radio est un réseau terrestre d'accès radio de l'UMTS [UTRAN], chaque station de base est un Noeud B, l'interface est un contrôleur de réseau radio [RNC] et l'unité mobile est un matériel d'utilisateur mobile [UE] ;
la communication des informations se fait entre des Noeuds B et le RNC par l'intermédiaire d'une interface Iub ou d'une interface combinée Iub / Iur ;
la sélection de la deuxième station de base est exécutée par le RNC en choisissant un deuxième Noeud B ; et
la communication de l'UE poursuivie par l'intermédiaire du
deuxième Noeud B se fait par l'intermédiaire d'une interface Uu.

5. Procédé selon la revendication 4, dans lequel chaque Noeud B a une antenne de formation de faisceau pouvant être actionnée de manière sélective, comprenant en outre les étapes consistant à :
déterminer (310) un emplacement relatif de l'UE par rapport aux antennes de formation de faisceau des Noeuds B au voisinage du premier Noeud B, et diriger (312) des canaux de balise des Noeuds B voisins vers l'emplacement de l'UE de manière à recevoir l'impulsion de sondage.

6. Procédé selon la revendication 4, dans lequel chaque Noeud B a une antenne de formation de faisceau pouvant être actionnée de manière sélective, comprenant en outre les étapes consistant à :
déterminer (310) un emplacement relatif de l'UE par rapport aux antennes de formation de faisceau des Noeuds B au voisinage du premier Noeud B, et imposer (312) aux Noeuds B voisins de balayer les canaux de balise sur un arc qui englobe l'emplacement de l'UE de manière à recevoir l'impulsion de sondage.

7. Procédé selon la revendication 4, dans lequel chaque Noeud B a une antenne de formation de faisceau pouvant être actionnée de manière sélective, comprenant en outre les étapes consistant à :
déterminer (310) un emplacement relatif de l'UE par rapport à l'antenne de formation de faisceau du deuxième Noeud B sélectionné sur la base des informations qui se rapportent à l'impulsion de sondage détectée, grâce à quoi la poursuite (314) de la communication de l'UE par l'intermédiaire du deuxième Noeud B inclut l'actionnement de l'antenne du Noeud B
sélectionné de manière à former un faisceau de communication pour au moins un canal dédié qui couvre une partie sélectionnée de la zone de couverture desservie par le deuxième Noeud B qui englobe l'emplacement relatif déterminé de l'UE.

8. Procédé selon la revendication 4, dans lequel l'UE a une antenne de formation de faisceau pouvant être actionnée de manière sélective, comprenant en outre l'étape consistant à :
déterminer (310) un emplacement relatif du deuxième Noeud B par rapport à l'antenne de formation de faisceau de l'UE sur la base des informations qui se rapportent à l'impulsion de sondage détectée, grâce à quoi la poursuite (314) de la communication de l'UE par l'intermédiaire du deuxième Noeud B inclut l'actionnement de l'antenne de l'UE de manière à former un faisceau de communication vers le deuxième Noeud B.

9. Procédé selon la revendication 1, dans lequel chaque station de base a une antenne de formation de faisceau pouvant être actionnée de manière sélective, comprenant en outre l'étape consistant à :
déterminer (310) un emplacement relatif de l'unité mobile par rapport à l'antenne de formation de faisceau de la station de base sélectionnée sur la base des informations qui se rapportent à l'impulsion de sondage détectée, grâce à quoi la poursuite (314) de la communication de l'unité mobile par l'intermédiaire de la deuxième station de base inclut l'actionnement de l'antenne de la station de base sélectionnée de manière à former un faisceau de communication qui couvre une partie sélectionnée de la zone de couverture desservie par la station de base sélectionnée qui englobe l'emplacement relatif de l'unité mobile.

10. Procédé selon la revendication 9, dans lequel le faisceau de communication formé porte des canaux communs et le fonctionnement de l'antenne de la station de base sélectionnée de manière à former un faisceau de communication qui englobe l'emplacement relatif de l'unité mobile est exécutée de telle sorte que d'autres unités mobiles avec lesquelles la station de base sélectionnée conduit une communication sans fil, soient également englobées à l'intérieur du faisceau de communication formé de telle sorte que le faisceau formé fournisse un service de canal commun à une pluralité d'unités mobiles.

11. Procédé selon la revendication 1, dans lequel l'unité mobile a une antenne de formation de faisceau qui peut être actionnée de manière sélective, et la transmission (202) d'une impulsion de sondage omnidirectionnelle à partir de l'unité mobile, est exécutée en transmettant (306) de multiples impulsions de sondage qui balayent sur 360 degrés ou sur un ensemble d'arcs calculés.

12. Procédé selon la revendication 1, dans lequel l'unité mobile est équipée d'un système de localisation global [GPS] et la transmission (202) d'une impulsion de sondage omnidirectionnelle inclut la transmission d'informations d'emplacement d'unité mobile associées à l'impulsion de sondage transmise par l'unité mobile et / ou inclut la transmission d'informations d'identification associées à l'impulsion de sondage transmise par l'unité mobile.

13. Procédé selon la revendication 1, dans lequel la transmission (202) d'une impulsion de sondage omnidirectionnelle inclut la transmission (306) d'une impulsion de sondage ultérieure de puissance accrue par l'unité mobile si un transfert ne se produit pas au cours d'une période de temps prédéfinie à partir de sa transmission d'une impulsion de sondage omnidirectionnelle.

14. Procédé selon la revendication 1, dans lequel la transmission (202) d'une impulsion de sondage omnidirectionnelle inclut la transmission (306) d'une série d'impulsions de sondage omnidirectionnelles de puissance croissante à partir de l'unité mobile.

15. Réseau de communication pour une communication sans fil avec des unités mobiles comprenant une pluralité de stations de base, chacune fournissant des services de communication sans fil dans une zone de couverture géographique qui peut chevaucher ou pas les zones de couverture géographique d'autre stations de base, ledit réseau étant **caractérisé par le fait qu'**il comprend :
au moins une interface de station de base connectée aux stations de base de telle sorte que chaque station de base ait une interface de commande associée à sa station de base vers les communications sans fil d'unité mobile ;
chaque station de base étant configurée de manière à détecter (204) les impulsions de sondage omnidirectionnelles émises à partir des unités mobiles de manière à établir une communication sans fil avec de telles unités mobiles lors de l'occurrence d'un événement de déclenchement de transfert ;
chaque station de base étant configurée de manière à communiquer (204) des informations qui se rapportent à une impulsion de sondage détectée à partir d'une unité mobile à une interface sélectionnée ;
chaque interface, quand elle agit en tant qu'interface de commande pour une station de base de desserte où une transmission d'une unité mobile communicante, est conduite par l'intermédiaire de la station de base de desserte, est configurée de manière à sélectionner (206) une station de base de transfert afin de poursuivre la communication sans fil de l'unité mobile communicante sur la base des informations communiquées à partir de chaque station de base qui a détecté une impulsion de sondage émise à partir de l'unité mobile communicante au cours de la communication avec la station de base de desserte ; et
chaque station de base étant configurée de manière à diriger (208) un faisceau de communication une fois sélectionnée comme station de base de transfert pour qu'une unité mobile communicante poursuive la communication sans fil de l'unité mobile communicante par l'intermédiaire de la station de base de transfert.

16. Réseau de communication selon la revendication 15, dans lequel chaque station de base a une antenne de formation de faisceau pouvant être actionnée de manière sélective et chaque interface, agissant en tant qu'interface de commande pour une station de base de desserte où une communication d'une unité mobile communicante est conduite par l'intermédiaire de la station de base de desserte, est configurée de manière à imposer (312) aux stations de base voisines de la station de base de desserte, de diriger les canaux de balise des stations de base voisines vers un emplacement déterminé de l'unité mobile communicante afin de recevoir l'impulsion de sondage transmise.

17. Réseau de communication selon la revendication 15, dans lequel chaque station de base a une antenne de formation de faisceau pouvant être actionnée de manière sélective et chaque interface, agissant en tant qu'interface de commande pour une station de base de desserte où une communication d'une unité mobile communicante est conduite par l'intermédiaire de la station de base de desserte, est configurée de manière à imposer (312) aux stations de base voisines de la station de base de desserte, de balayer les canaux de balise sur un arc qui englobe un emplacement déterminé de l'unité mobile communicante afin de recevoir l'impulsion de sondage transmise.

18. Réseau de communication selon la revendication 15, dans lequel le réseau radio est un réseau terrestre d'accès radio de l'UMTS [UTRAN], chaque station de base est un Noeud B configuré de manière à communiquer avec les unités mobiles configurées en tant que matériels d'utilisateur mobile [UEs] par l'intermédiaire d'une interface Uu, et chaque interface de station de base est un contrôleur de réseau radio [RNC] configuré de manière à communiquer des informations avec les Noeuds B par l'intermédiaire d'une interface Iub ou une interface combinée Iub / Iur en liaison avec un autre RNC.

19. Réseau de communication selon la revendication 18, dans lequel chaque Noeud B a une antenne de formation de faisceau pouvant être actionnée de manière sélective et pouvant être configurée de façon à diriger (312) un faisceau de communication qui couvre une partie sélectionnée de la zone de couverture desservie par le Noeud B qui englobe l'emplacement relatif d'un UE communicant lorsque ce Noeud B est sélectionné comme le Noeud B de transfert pour une communication sans fil de l'UE communicant.

20. Réseau de communication selon la revendication 19, dans lequel chaque Noeud B est configuré de manière à actionner son antenne afin de former un faisceau de communication qui porte des canaux communs, qui englobe l'emplacement relatif d'une pluralité d'UEs de telle sorte que le faisceau formé fournisse un service de canal commun à une pluralité d'UEs.

21. Réseau de communication selon la revendication 15, dans lequel :
chaque station de base a une antenne de formation de faisceau pouvant être actionnée de manière sélective,
chaque interface, agissant en tant qu'interface de commande pour une station de base de desserte où une communication d'une unité mobile communicante est conduite par l'intermédiaire de la station de base de desserte, est configurée de manière à déterminer (310) un emplacement relatif de l'unité mobile communicante de telle sorte que l'interface puisse imposer (312) aux stations de base voisines de la station de base de desserte, de diriger de manière sélective leurs antennes de formation de faisceau vers l'emplacement relatif déterminé de l'unité mobile communicante lorsque l'unité mobile doit émettre (304) une impulsion de sondage afin de procéder à un transfert.

22. Réseau de communication selon la revendication 21, comprenant en outre des unités mobiles, chacune d'elles étant configurée afin de transmettre (202) une impulsion de sondage omnidirectionnelle de manière à lancer un transfert à partir d'une station de base de desserte vers une station de base de transfert.

23. Réseau de communication selon la revendication 22, dans lequel les unités mobiles sont configurées chacune de manière à surveiller le niveau de puissance d'un faisceau de communication dirigé en provenance d'une station de base qui est reçu par l'unité mobile, et à transmettre (202) une impulsion de sondage omnidirectionnelle si le niveau de puissance surveillé tombe en dessous d'un niveau prédéfini.

24. Réseau de communication selon la revendication 22, dans lequel chaque unité mobile est configurée de manière à transmettre (306) une impulsion de sondage omnidirectionnelle ultérieure si un faisceau de communication dirigé n'est pas reçu en provenance d'une station de base de transfert au cours d'une période de temps prédéfinie à partir de la transmission d'une impulsion de sondage omnidirectionnelle.

25. Réseau de communication selon la revendication 22, dans lequel chaque unité mobile est équipée d'un système de localisation global [GPS] et est configurée de manière à transmettre une impulsion de sondage omnidirectionnelle qui inclut des informations qui concernent l'emplacement d'une unité mobile, déterminées par les informations de son GPS et / ou d'identification de l'unité mobile.

26. Réseau de communication selon la revendication 22, dans lequel chaque unité mobile a une antenne de formation de faisceau qui peut être actionnée de manière sélective, configurée afin de transmettre (202) une impulsion de sondage omnidirectionnelle en transmettant (306) de multiples impulsions de sondage qui balayent sur 360 degrés ou sur un ensemble d'arcs calculés.

27. Réseau de communication selon la revendication 22, dans lequel chaque unité mobile est configurée de manière à transmettre (306) une impulsion de sondage ultérieure de puissance accrue si des informations suffisantes pour effectuer un transfert ne sont pas reçues au cours d'une période de temps prédéfinie à partir de sa transmission (202) d'une impulsion de sondage omnidirectionnelle.

28. Réseau communication selon la revendication 15, chaque interface étant configurée de manière à sélectionner (206) la station de base de transfert sur la base d'une réception d'informations communiquées en provenance des stations de base qui répondent à l'impulsion de sondage au cours d'une période de temps prédéfinie à partir de son émission (202) en provenance de l'unité mobile communicante.

29. Procédé de transfert d'une communication sans fil conduite par une unité mobile communicante par l'intermédiaire d'une station de base de desserte à une station de base de transfert dans un réseau radio ayant une pluralité de stations de base, chacune fournissant des services de communication sans fil dans une zone de couverture géographique respective qui peut chevaucher ou pas les zones de couverture géographique d'autres stations de base, le procédé étant **caractérisé par le fait qu'**il comprend les étapes consistant à :
transmettre (404) une impulsion de sondage omnidirectionnelle à partir de l'unité mobile communicante au cours de la communication sans fil lors de l'occurrence d'un événement de déclenchement ;
recevoir (406), au niveau de l'unité mobile, un faisceau de communication en provenance des stations de base qui détectent l'impulsion de sondage ;
sélectionner (408) une station de base de transfert parmi les stations de base qui ont détecté l'impulsion de sondage sur la base des faisceaux de communication reçus par l'unité mobile ; et
poursuivre (410) la communication sans fil par l'intermédiaire de la station de base de transfert sélectionnée.

30. Procédé selon la revendication 29, dans lequel le réseau radio a une interface connectée aux stations de base, comprenant en outre les étapes consistant à :
communiquer (204) des informations qui se rapportent à l'impulsion de sondage détectée à l'interface par chaque station de base qui détecte l'impulsion de sondage ;
choisir (206) une ou plusieurs des stations de base qui ont détecté l'impulsion de sondage pour répondre à l'impulsion de sondage de l'unité mobile sur la base des informations communiquées de telle sorte que seules les stations de base sélectionnées dirigent un faisceau de communication vers l'unité mobile.

31. Procédé selon la revendication 30, dans lequel :
le réseau radio est un réseau terrestre d'accès radio de l'UMTS [UTRAN], chaque station de base est un Noeud B, l'interface est un contrôleur de réseau radio [RNC] et l'unité mobile est un matériel d'utilisateur mobile [UE] ;
la communication des informations se fait entre les Noeuds B et le RNC par l'intermédiaire d'une interface Iub ou d'une interface combinée Iub / Iur ; et
la communication de l'UE par l'intermédiaire du Noeuds Bs se fait par l'intermédiaire d'une interface Uu.

32. Procédé selon la revendication 31, dans lequel chaque Noeud B a une antenne de formation de faisceau pouvant être actionnée de manière sélective, comprenant en outre l'étape consistant à :
déterminer (310) un emplacement relatif de l'UE par rapport à l'antenne de formation de faisceau de chaque Noeud B détectant une impulsion de sondage sur la base des informations qui se rapportent à l'impulsion de sondage détectée, grâce à quoi la direction (312) d'un faisceau de communication vers l'UE inclut l'actionnement des antennes des Noeuds B respectifs de manière à former des faisceaux de communication qui couvre chacun une partie sélectionnée de la zone de couverture desservie par le Noeud B respectif qui englobe l'emplacement relatif de l'UE.

33. Procédé selon la revendication 29, dans lequel chaque station de base a une antenne de formation de faisceau pouvant être actionnée de manière sélective, comprenant en outre l'étape consistant à :
déterminer (310) un emplacement relatif de l'unité mobile communicante par rapport à l'antenne de formation de faisceau de chaque station de base recevant une impulsion de sondage sur la base des informations qui se rapportent à l'impulsion de sondage détectée, grâce à quoi la direction (312) d'un faisceau de communication vers l'unité mobile inclut l'actionnement de l'antenne de la station de base respective de manière à former un faisceau de communication qui couvre une partie sélectionnée de la zone de couverture desservie par la station de base respective qui englobe l'emplacement relatif de l'unité mobile.

34. Procédé selon la revendication 33, dans lequel chaque faisceau de communication formé respectif porte des canaux communs et le fonctionnement de chaque antenne de station de base respective de manière à former un faisceau de communication qui englobe l'emplacement relatif de l'unité mobile est exécuté de telle sorte que d'autres unités mobiles avec lesquelles la station de base respective conduit une communication sans fil, soient également englobés à l'intérieur du faisceau de communication formé.

35. Procédé selon la revendication 29, dans lequel l'unité mobile a une antenne de formation de faisceau qui peut être actionnée de manière sélective, et la transmission (202) d'une impulsion de sondage omnidirectionnelle à partir de l'unité mobile, est exécutée en transmettant (306) de multiples impulsions de sondage qui balayent sur 360 degrés ou sur un ensemble d'arcs calculés.

36. Procédé selon la revendication 29, dans lequel l'unité mobile est équipée d'un système de localisation global [GPS] et la transmission (202) d'une impulsion de sondage omnidirectionnelle inclut la transmission (306) d'informations d'emplacement d'unité mobile associées à l'impulsion de sondage transmise par l'unité mobile et / ou inclut la transmission d'informations d'identification associées à l'impulsion de sondage transmise par l'unité mobile.

37. Procédé selon la revendication 29, dans lequel la transmission (202) d'une impulsion de sondage omnidirectionnelle inclut la transmission (306) d'une série d'impulsions de sondage omnidirectionnelles de puissance croissante à partir de l'unité mobile.

38. Unité mobile destinée à être utilisée dans un réseau de communication ayant une pluralité de stations de base, chaque station de base fournissant des services de communication sans fil dans une zone de couverture géographique respective qui peut chevaucher ou pas les zones de couverture géographique d'autre stations de base, l'unité mobile étant **caractérisée par le fait qu'**elle comprend :
un émetteur configuré pour émettre (404) une impulsion de sondage omnidirectionnelle sur la base de l'occurrence d'un événement de déclenchement au cours d'une communication sans fil conduite par l'intermédiaire d'une station de base de desserte ;
un récepteur configuré de manière à recevoir (406) les faisceaux de communication en provenance des stations de base qui ont détecté une impulsion de sondage émise par l'unité mobile ; et
un processeur configuré de manière à sélectionner (408) une station de base de transfert par l'intermédiaire de laquelle l'unité mobile poursuit la communication sans fil sur la base des faisceaux de communication reçus par l'unité mobile en provenance des stations de base qui ont détecté l'impulsion de sondage émise par l'unité mobile.

39. Unité mobile selon la revendication 38, dans laquelle l'unité mobile est configurée de manière à émettre (404) une impulsion de sondage omnidirectionnelle ultérieure si un faisceau de communication n'est pas reçu en provenance d'une station de base qui a détecté une impulsion de sondage émise par l'unité mobile au cours d'une période de temps prédéfinie à partir de la transmission d'une impulsion de sondage omnidirectionnelle.

40. Unité mobile selon la revendication 38, dans laquelle l'unité mobile est équipée d'un système de localisation global [GPS] et est configurée de manière à émettre (404) une impulsion de sondage omnidirectionnelle qui inclut des informations sur l'emplacement de l'unité mobile déterminées par son GPS.

41. Unité mobile selon la revendication 38, dans laquelle l'unité mobile est configurée de manière à émettre (404) une impulsion de sondage omnidirectionnelle qui inclut des informations d'identification d'unité mobile.

42. Unité mobile selon la revendication 38, dans laquelle l'unité mobile est configurée de manière à émettre (306) une série d'impulsions de sondage omnidirectionnelles de puissance allant en croissant lors de l'occurrence d'un événement de déclenchement de transfert.

43. Unité mobile selon la revendication 38, dans laquelle chaque unité mobile a une antenne de formation de faisceau qui peut être actionnée de manière sélective, configurée afin de transmettre (202) une impulsion de sondage omnidirectionnelle en transmettant (306) de multiples impulsions de sondage qui balayent sur 360 degrés ou sur un ensemble d'arcs calculés.

44. Réseau de communication pour une communication sans fil comprenant une pluralité d'unités mobiles selon la revendication 38, et une pluralité de stations de base, dans lequel :
chaque station de base est configurée de manière à fournir des services de communication sans fil dans une zone de couverture géographique qui peut chevaucher ou pas les zones de couverture géographique d'autres stations de base ;
chaque station de base est configurée de manière à détecter (204) les impulsions de sondage émises à partir des unités mobiles de manière à établir une communication sans fil avec de telles unités mobiles ;
chaque station de base est configurée de manière à communiquer (208), vers une unité mobile, des informations qui se rapportent à une impulsion de sondage détectée en provenance de ladite unité mobile ; et
chaque station de base est configurée de manière à diriger (208) un faisceau de communication une fois sélectionnée comme station de base de transfert pour qu'une unité mobile communicante poursuive la communication sans fil de l'unité mobile communicante par l'intermédiaire de la station de base de transfert.
